(19) Europäisches Patentamt / European Patent Office / Office européen des brevets

(11) **EP 2 779 646 A1**

(12) **EUROPEAN PATENT APPLICATION**
published in accordance with Art. 153(4) EPC

(43) Date of publication:
**17.09.2014 Bulletin 2014/38**

(51) Int Cl.:
***H04N 7/30*** (0000.00)

(21) Application number: **12848428.4**

(86) International application number:
**PCT/KR2012/009326**

(22) Date of filing: **07.11.2012**

(87) International publication number:
**WO 2013/069958 (16.05.2013 Gazette 2013/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.11.2011 US 201161556510 P**

(71) Applicant: **Samsung Electronics Co., Ltd.**
**Suwon-si, Gyeonggi-do 443-742 (KR)**

(72) Inventors:
• **ALSHINA, Elena**
 **Suwon-si**
 **Gyeonggi-do 443-744 (KR)**
• **ALSHIN, Alexander**
 **Suwon-si**
 **Gyeonggi-do 443-744 (KR)**

(74) Representative: **Jones, Ithel Rhys**
 **Appleyard Lees**
 **15 Clare Road**
 **Halifax, Yorkshire HX1 2HY (GB)**

(54) **INVERSE TRANSFORMATION METHOD FOR CLIPPING DATA OF INVERSE QUANTIZATION, INVERSE TRANSFORMATION DURING VIDEO DECODING STEP, AND DEVICE THEREFOR**

(57)     Provided are video encoding and video decoding for performing clipping on data during inverse quantization and inverse transformation according to blocks. An inverse transformation method includes: receiving quantized transformation coefficients of a current block; clipping transformation coefficients generated by inverse-quantizing the quantized transformation coefficients to a range of a first maximum value and a first minimum value that are determined based on a size of the current block; clipping intermediate data generated by performing first inverse transformation on the clipped transformation coefficients by using a first inverse transformation matrix to a range of a second maximum value and a second minimum value that are determined based on the size of the current block and in internal bit depth; and performing second inverse transformation on the clipped intermediate data by using a second inverse transformation matrix.

FIG. 1

**Description**

TECHNICAL FIELD

The present invention relates to video encoding and video decoding, and more particularly, to video encoding and video decoding for clipping data during inverse quantization and inverse transformation according to blocks.

BACKGROUND ART

As hardware for reproducing and storing high resolution or high quality video content is being developed and supplied, a need for a video codec for effectively encoding or decoding the high resolution or high quality video content is increasing. According to a conventional video codec, a video is encoded according to a limited encoding method based on a macroblock having a predetermined size.

Image data of a spatial domain is transformed into coefficients of a frequency region via frequency transformation. According to a video codec, an image is split into blocks having a predetermined size, discrete cosine transformation (DCT) is performed for each respective block, and frequency coefficients are encoded in block units, for rapid calculation of frequency transformation. Compared with image data of a spatial domain, coefficients of a frequency region are easily compressed. In particular, since an image pixel value of a spatial domain is expressed according to a prediction error via inter prediction or intra prediction of a video codec, when frequency transformation is performed on the prediction error, a large amount of data may be transformed to 0. According to a video codec, an amount of data may be reduced by replacing data that is consecutively and repeatedly generated with small-sized data.

DETAILED DESCRIPTION OF THE INVENTION

TECHNICAL PROBLEM

According to the present invention, intermediate data is clipped during inverse quantization and inverse transformation so as to prevent an overflow in inverse transformation of video decoding, and a clipping range for reducing a clipping number of times is determined.

TECHNICAL SOLUTION

According to an aspect of the present invention, there is provided an inverse transformation method for video decoding, including: receiving quantized transformation coefficients of a current block; generating transformation coefficients by inverse-quantizing the quantized transformation coefficients, and clipping the generated transformation coefficients to a range of a first maximum value and a first minimum value that are determined based on a size of the current block; performing first inverse transformation on the clipped transformation coefficients by using a first inverse transformation matrix, and clipping intermediate data generated via the first inverse transformation to a range of a second maximum value and a second minimum value determined based on the size of the current block and an internal bit depth; and performing second inverse transformation on the clipped intermediate data by using a second inverse transformation matrix.

ADVANTAGEOUS EFFECTS

Overflows of registers may be prevented since input data of first inverse transformation and second inverse transformation is pre-clipped such that intermediate data and output data generated via the first inverse transformation and the second inverse transformation during a video decoding process are stored in a register and a buffer, according to an inverse transformation method according to one or more embodiments of the present invention. Also, by performing clipping only after inverse quantization and the first inverse transformation without having to progressively perform clipping, an overflow of output data of the first inverse transformation and the second inverse transformation may be prevented via a minimum clipping.

DESCRIPTION OF THE DRAWINGS

FIG. 1 is a block diagram of an inverse transformation apparatus according to an embodiment;
FIG. 2 illustrates an inverse transformation process for video decoding, according to an embodiment;

FIG. 3 illustrates a storage process of data generated during inverse transformation, according to an embodiment;
FIG. 4 is a flowchart illustrating an inverse transformation method according to an embodiment;
FIG. 5 is a block diagram of a video decoding apparatus including the inverse transformation apparatus of FIG. 1, according to an embodiment;
FIG. 6 is a flowchart illustrating a video decoding method performed by a video decoding apparatus, according to an embodiment;
FIG. 7 is a block diagram of a video encoding apparatus including the inverse transformation apparatus of FIG. 1, according to an embodiment;
FIG. 8 is a flowchart illustrating a video encoding method performed by a video encoding apparatus, according to an embodiment;
FIG. 9 is a block diagram of a video encoding apparatus based on a coding unit according to a tree structure, according to an embodiment;
FIG. 10 is a block diagram of a video decoding apparatus based on a coding unit according to a tree structure, according to an embodiment;
FIG. 11 is a diagram for describing a concept of coding units according to an embodiment;
FIG. 12 is a block diagram of an image encoder based on coding units according to an embodiment;
FIG. 13 is a block diagram of an image decoder based on coding units according to an embodiment;
FIG. 14 is a diagram illustrating deeper coding units according to depths, and partitions according to an embodiment;
FIG. 15 is a diagram for describing a relationship between a coding unit and transformation units, according to an embodiment;
FIG. 16 is a diagram for describing encoding information of coding units corresponding to a coded depth, according to an embodiment;
FIG. 17 is a diagram of deeper coding units according to depths, according to an embodiment;
FIGS. 18 through 20 are diagrams for describing a relationship between coding units, prediction units, and transformation units, according to an embodiment;
FIG. 21 is a diagram for describing a relationship between a coding unit, a prediction unit, and a transformation unit, according to encoding mode information of Table 1.
FIG. 22 illustrates a physical structure of a disc that stores a program, according to an embodiment;
FIG. 23 illustrates a disc drive that records and reads a program by using a disc;
FIG. 24 illustrates an entire structure of a content supply system that provides content distribution service;
FIGS. 25 and 26 illustrate external and internal structures of a mobile phone to which a video encoding method and a video decoding method are applied, according to an embodiment of the present invention;
FIG. 27 illustrates a digital broadcasting system employing a communication system, according to an embodiment of the present invention; and
FIG. 28 illustrates a network structure of a cloud computing system using a video encoding apparatus and a video decoding apparatus, according to an embodiment of the present invention.

BEST MODE

According to an aspect according to the present invention, there is provided an inverse transformation method for video decoding, including: receiving quantized transformation coefficients of a current block; generating transformation coefficients by inverse-quantizing the quantized transformation coefficients, and clipping the generated transformation coefficients to a range of a first maximum value and a first minimum value that are determined based on a size of the current block; performing first inverse transformation on the clipped transformation coefficients by using a first inverse transformation matrix, and clipping intermediate data generated via the first inverse transformation to a range of a second maximum value and a second minimum value determined based on the size of the current block and an internal bit depth; and performing second inverse transformation on the clipped intermediate data by using a second inverse transformation matrix.

The first inverse transformation matrix may be a one-dimensional (1 D) inverse transformation matrix in a vertical frequency direction, and the second inverse transformation matrix is a 1 D inverse transformation matrix in a horizontal frequency direction.

The clipping of the intermediate data may include: storing the intermediate data generated via the first inverse transformation in a first storage unit; and storing the clipped intermediate data in a second storage unit.

The first maximum value may be determined by using a first storage maximum value indicating a maximum value of data storable in the first storage unit, a second storage maximum value indicating a maximum value of data storable in the second storage unit, and a length of the first inverse transformation matrix. The second maximum value may be determined by using the first storage maximum value, the second storage maximum value, a length of the second inverse transformation matrix, and an internal matrix.

The length of the first inverse transformation matrix may be determined based on the size of the current block and the length of the second inverse transformation matrix is determined based on the size of the current block.

The inverse transformation method may further include: performing intra prediction decoding or motion compensation on restored residual data of the current block, which is generated via the second inverse transformation; and restoring image data of the current block via the intra prediction decoding or motion compensation.

The receiving of the quantized transformation coefficients may include extracting the quantized transformation coefficients of the current block by parsing a received bitstream and performing entropy decoding.

The receiving of the quantized transformation coefficients may include: performing transformation and quantization on residual data of the current block, which is generated via intra prediction encoding or motion prediction; and receiving the quantized transformation coefficients generated via the transformation and the quantization.

According to another aspect according to the present invention, there is provided an inverse transformation apparatus for video decoding, including: an inverse quantizer for generating transformation coefficients by inverse-quantizing quantized transformation coefficients of a current block, and clipping the generated transformation coefficients to a range of a first maximum value and a first minimum value that are determined based on a size of the current block; a first inverse transformer for performing first inverse transformation on the clipped transformation coefficients by using a first inverse transformation matrix, and clipping first intermediate data generated via the first inverse transformation to a range of a second maximum value and a second minimum value determined based on the size of the current block and an internal bit depth; and a second inverse transformer for performing second inverse transformation on the clipped first intermediate data by using a second inverse transformation matrix.

The inverse transformation apparatus may further include: a first storage unit for storing the first intermediate data generated via the first inverse transformation; a second storage unit for storing the clipped first intermediate data; and a third storage unit for storing restored residual data of the current block by de-scaling bitwise-shifting second intermediate data generated via the second inverse transformation considering an internal bit depth.

According to another aspect according to the present invention, there is provided a video decoding apparatus further including, as well as the inverse transformation apparatus, a prediction decoder for restoring image data of the current block by performing intra prediction decoding or motion compensation on restored residual data of the current block, which is generated via the second inverse transformation.

The video decoding apparatus may further include a receiver for extracting the quantized transformation coefficients of the current block by parsing a received bitstream and performing entropy decoding.

According to another aspect according to the present invention, there is provided a video encoding apparatus further including, as well as the inverse transformation apparatus, an encoder for performing transformation and quantization on residual data of the current block, which is generated via intra prediction encoding or motion prediction.

According to another aspect according to the present invention, there is provided a computer-readable recording medium having recorded thereon a program for executing the inverse transformation method.

MODE OF THE INVENTION

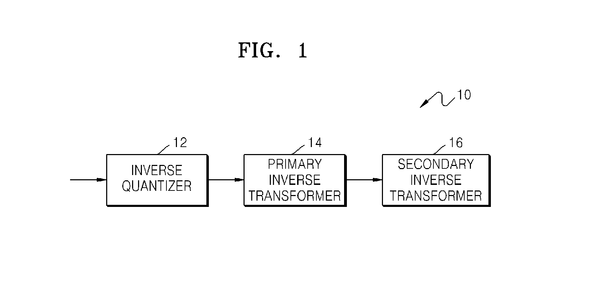

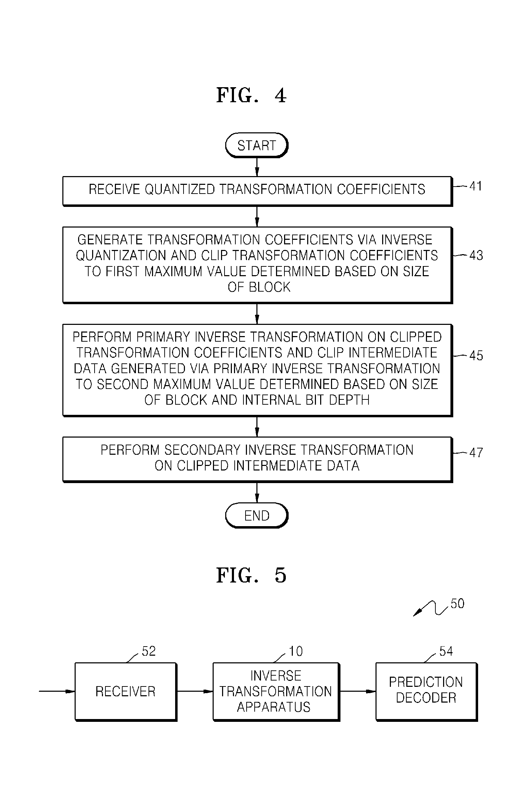

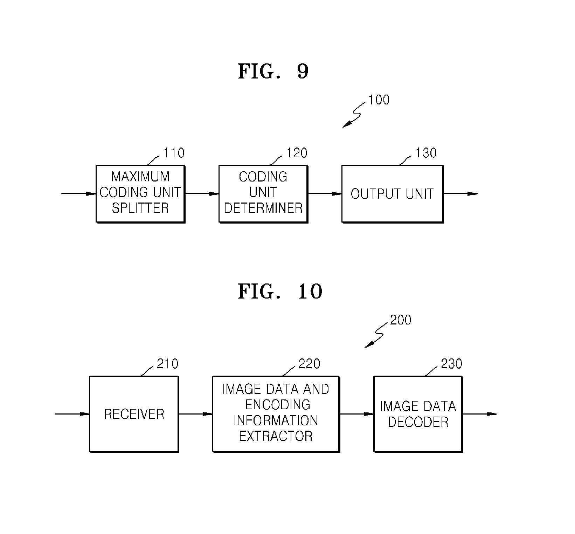

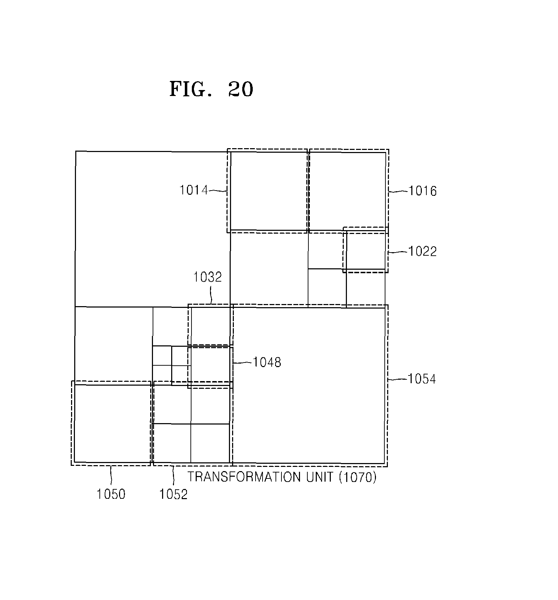

Hereinafter, an inverse transformation apparatus and an inverse transformation method for video decoding, according to embodiments will be described with reference to FIGS. 1 through 4. Also, a video encoding method and a video decoding method that involve an inverse transformation method, according to embodiments, and a video encoding apparatus and a video decoding apparatus that include an inverse transformation apparatus, according to embodiments, will be described with reference to FIGS. 5 through 8. Also, a video encoding technique and a video decoding technique that involve an inverse transformation method based on coding units having a tree structure, according to embodiments of the present invention, will be described with reference to FIGS. 9 through 21. Hereinafter, an 'image' may denote a still image or a moving image of a video, or a video itself.

First, an inverse transformation apparatus and an inverse transformation method for video decoding, according to embodiments will be described with reference to FIGS. 1 through 4.

FIG. 1 is a block diagram of an inverse transformation apparatus 10 according to an embodiment.

The inverse transformation apparatus 10 includes an inverse quantizer 12, a first inverse transformer 14, and a second inverse transformer 16.

The inverse transformation apparatus 10 may receive quantized transformation coefficients according to blocks for encoding, and output residual data in a spatial domain restored via inverse quantization and inverse transformation. The residual data may be differential data of pixel values between a current region and another region.

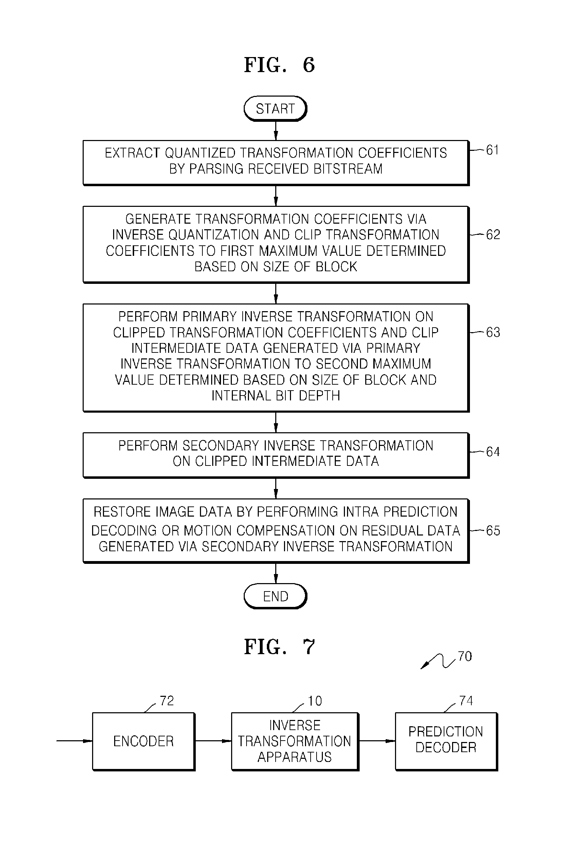

According to video encoding based on blocks, each image in an image sequence of a video is split into blocks and is encoded according to the blocks. A block may have a square shape, a rectangular shape, or any geometric shape and is not limited to a data unit having a predetermined size. According to an embodiment of the present invention, a block may be a maximum coding unit, a coding unit, a prediction unit, a transformation unit, or the like from among coding units according to a tree structure. Video encoding and decoding methods based on coding units according to a tree structure will be described below with reference to FIGS. 6 through 18.

For video encoding, the quantized transformation coefficients may be generated as transformation and quantization are performed on the residual data according to the blocks of the image. During a video decoding process, inverse quantization is required to restore transformation coefficients from the quantized transformation coefficients, and inverse transformation is required to restore the residual data in the spatial domain from the restored transformation coefficients.

The inverse quantizer 12 generates the transformation coefficients by performing inverse quantization on the received quantized transformation coefficients. The first inverse transformer 14 performs first inverse transformation on the transformation coefficients generated by the inverse quantizer 12. The second inverse transformer 16 may output the residual data in the spatial domain by performing second inverse transformation on output data of the first inverse transformer 14.

During the video decoding process, inverse transformation is performed on transformation coefficients to restore data in a spatial domain from transformation coefficients generated via fixed-point transformation. In response to the fixed-point transformation, output data generated via fixed-point inverse transformation may be de-scaled to a predetermined bit depth or below.

Accordingly, the first inverse transformer 14 may store data inverse- transformed via the first inverse transformation in a first storage unit having a first data size. The first inverse transformer 14 may perform de-scaling on the data stored in the first storage unit, i.e., the data inverse-transformed via the first inverse transformation, and store the de-scaled data in a second storage unit having a second data size.

Also, the second inverse transformer 16 may store data inverse-quantized via the second inverse transformation in the first storage unit having the first data size. The second inverse transformer 16 may perform de-scaling on the data stored in the first storage unit, i.e., the data inverse-quantized via the second inverse transformation. The second inverse transformer 16 may perform de-scaling considering an internal bit depth used for accurate prediction encoding, and store the de-scaled data in the second storage unit having the second data size.

A data size of a storage unit denotes a size for storing data of a predetermined bit depth, and may be a maximum value of data stored in the storage unit. Hereinafter, a maximum value and a minimum value of the data may be determined by the predetermined bit depth of the data, and since a data value is a value between the maximum and minimum values, a dynamic range of the data may be determined by the predetermined bit depth. The minimum value of the data of the predetermined bit depth may be a negative value corresponding to the maximum value that is a positive number. Accordingly, the data size of the storage unit where the data of the predetermined bit depth is stored may also be determined according to the predetermined bit depth of the data. Hereinafter, a bit depth, a maximum value, a range of data, and a data size of a storage unit all have the similar meaning. Thus, storage units having different data sizes may store data of different bit depths.

The first and second inverse transformers 14 and 16 may realize de-scaling by bitwiseshifting the data generated via the respective inverse transformation to right by the predetermined bit depth. Specifically, the second inverse transformer 16 may perform bitwise-shift by a number of bits determined while considering the internal bit depth.

In order for the first inverse transformer 14 to store the data inverse- transformed via the first inverse transformation in the first storage unit, a maximum value of the inverse-transformed data may be smaller than or equal to a maximum value of data storable in the first storage unit. Also, in order for the de-scaled data of the data inverse-transformed via the first inverse transformation to be stored in the second storage unit, a maximum value of the de-scaled data after the first inverse transformation may be smaller than or equal to a maximum value of data storable in the second storage unit.

The first inverse transformer 14 may perform the first inverse transformation by using an inverse transformation matrix in a vertical frequency direction.

An inverse transformation matrix, maximum values of data storable in the first and second storage units, and a bit number of bitwise-shift for de-scaling are fixed constants. Accordingly, in order for the maximum value of the data inverse- transformed via the first inverse transformation to be adjusted based on the first and second storage units, a range of output data of the inverse quantizer 12, the output data being an input for the first inverse transformation, needs to be adjusted. The inverse quantizer 12 may perform inverse quantization to clip the generated transformation coefficients to a predetermined range.

Also, in order for the second inverse transformer 16 to store the data inverse-transformed via the second inverse transformation in the first storage unit, a maximum value of the inverse-transformed data may be smaller than or equal to the maximum value of data storable in the first storage unit. Also, in order for the de-scaled data of the data inverse-transformed via the second inverse transformation to be stored in the second storage unit, a maximum value of the de-scaled data after the second inverse transformation may be smaller than or equal to the maximum value of data storable in the second storage unit.

The second inverse transformer 16 may perform the second inverse transformation by using an inverse transformation matrix in a horizontal frequency direction. Since an inverse transformation matrix, maximum values of data storable in the first and second storage units, and a bit number of bitwise-shift for de-scaling are fixed constants, in order for the maximum value of the data inverse-transformed via the second inverse transformation to be adjusted based on the first and second storage units, a range of output data of the first inverse transformer 14, the output data being an input for the second inverse transformation, needs to be adjusted. Accordingly, the first inverse transformer 14 may clip intermediate data generated via the first inverse transformation to a predetermined range.

As such, the inverse quantizer 12 may clip the transformation coefficients generated by inverse-quantizing the quantized transformation coefficients to a range of a first maximum value and a first minimum value that are determined based on a length of the inverse transformation matrix in the vertical frequency direction. The length of the inverse transformation matrix in the vertical frequency direction may be determined based on a size of the current block. Accordingly, the inverse quantizer 12 may clip the transformation coefficients after the inverse quantization to the range of the first maximum value and the first minimum value that are determined based on the size of the current block.

The first inverse transformer 14 may perform the first inverse transformation on the transformation coefficients clipped by the inverse quantizer 12, by using the inverse transformation matrix in the vertical frequency direction. The first inverse transformer 14 may store first intermediate data generated via the first inverse transformation in the first storage unit, and de-scale the first intermediate data stored in the first storage unit by a first bit depth.

The first inverse transformer 14 may clip the de-scaled first intermediate data to a range of a second maximum value and a second minimum value that are determined based on a length of the inverse transformation matrix in the horizontal frequency direction and the internal bit depth. The length of the inverse transformation matrix in the horizontal frequency direction may also be determined based on the size of the current block. Accordingly, the first inverse transformer 14 may clip the de-scaled first intermediate data after inverse transformation in the vertical frequency direction to the range of the second maximum value and the second minimum value that are determined based on the size of the current block and the internal bit depth. The first inverse transformer 14 may store the clipped first intermediate data in the second storage unit.

The second inverse transformer 16 may perform the second inverse transformation on the first intermediate data clipped by the first inverse transformer 14, by using the inverse transformation matrix in the horizontal frequency direction.

The second inverse transformer 16 may store second intermediate data generated via the second inverse transformation in the first storage unit, and de-scale the second intermediate data stored in the first storage unit by a second bit depth determined by considering the internal bit depth. The second inverse transformer 16 may store the de-scaled second intermediate data in the second storage unit.

First transformation may be consecutively performed twice on a two-dimensional (2D) block for 2D transformation of the 2D block. Accordingly, in a video decoding process, 1D inverse transformation may be consecutively performed twice for 2D inversion transformation.

Accordingly, the first and second inverse transformers 14 and 16 may each perform 1 D inverse transformation. For example, a first inverse transformation matrix of the first inverse transformer 14 may be an 1 D inverse transformation matrix in a vertical frequency direction, and a second inverse transformation matrix of the second inverse transformer 16 may be a 1 D inverse transformation matrix in a horizontal frequency direction.

The first inverse transformer 14 may determine the first maximum value by using the maximum value (a first storage maximum value) of the data storable in the first storage unit, the maximum value (a second storage maximum value) of the data storable in the second storage unit, and the first inverse transformation matrix. The first minimum value may be a minimum negative value corresponding to the first maximum value.

The second inverse transformer 16 may determine the second maximum value by using the first storage maximum value, the second storage maximum value, the second inverse transformation matrix, and the internal matrix. The second minimum value may be a minimum negative value corresponding to the second maximum value.

The first maximum value may be determined to be a smaller value from among i) a value obtained by dividing a de-scaling bitwise-shifted value of the second storage maximum value by the length of the first inverse transformation matrix, and ii) a value obtained by dividing the first storage maximum value by the length of the first inverse transformation matrix.

The second maximum value may be determined to be a smaller value from among iii) a value obtained by dividing a de-scaled bitwise-shifted value of the second storage maximum value considering the internal bit depth by the length of the second inverse transformation matrix, and iv) a value obtained by dividing the first storage maximum value by the length of the second inverse transformation matrix.

For example, the length of the first inverse transformation matrix may be an L1-norm value of the first inverse transformation matrix. Similarly, the length of the second inverse transformation matrix may be an L1-norm value of the second inverse transformation matrix.

Accordingly, the inverse transformation apparatus 10 may adjust the dynamic range of the quantized transformation coefficient by considering the data sizes of the first and second storage units where the data is to be stored after the first inverse transformation, i.e., the maximum values of data storable in the first and second storage units. Also, the inverse transformation apparatus 10 may adjust the dynamic range of the data that is first inverse-transformed by considering the maximum values of the data storable in the first and second storage units where the data after the second inverse transformation is stored, and the internal bit depth for de-scaling.

The first storage unit may be a register and the second storage unit may be a buffer.

According to the inverse transformation apparatus 10, overflows of registers may be prevented since input data of first inverse transformation and second inverse transformation is pre-clipped so that intermediate data and output data generated via the first inverse transformation and the second inverse transformation during a video decoding process are stored in a register and a buffer. Also, by only performing clipping after inverse quantization and first inverse transformation without having to progressively perform clipping, overflows of output data of the first and second inverse transformations may be prevented with a minimum clipping.

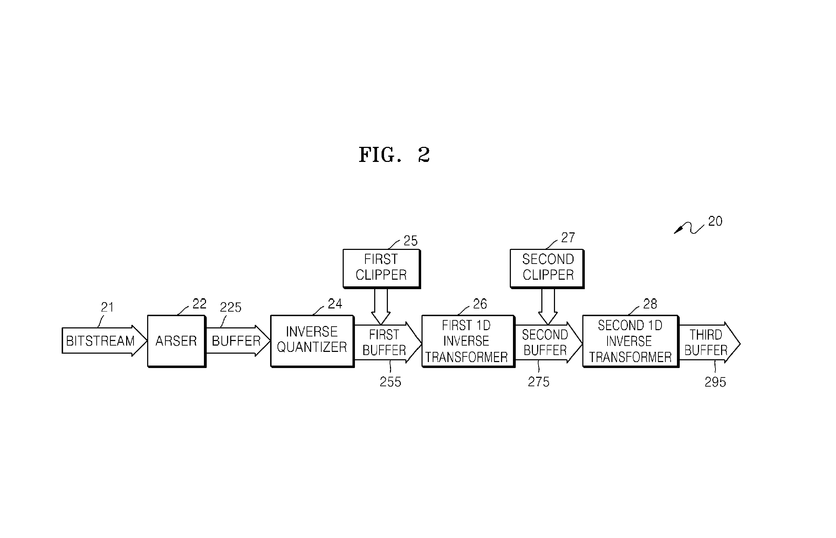

FIG. 2 illustrates an inverse transformation process for video decoding, according to an embodiment.

The inverse transformation apparatus 10 of FIG. 1 and the inverse transformation process of FIG. 2 may partially correspond to each other. The inverse quantizer 12 of FIG. 1 may include an inverse quantizer 24 and a first clipper 25, the first inverse transformer 14 may include a first 1D inverse transformer 26 and a second clipper 27, and the second inverse transformer 16 may include a second 1 D inverse transformer 28.

A parser 22 may receive and parse a bitstream 21, and extract quantized transformation coefficients from the bitstream 21. The quantized transformation coefficients extracted by the parser 22 may be stored in a buffer 225 that is a temporary storage unit.

The inverse quantizer 24 may generate transformation coefficients by performing inverse quantization on the quantized transformation coefficients stored in the buffer 225. The first clipper 25 may clip the transformation coefficients generated by the inverse quantizer 24 to be within a range of a first maximum value and a first minimum value. The first minimum value may be a minimum negative value corresponding to the first maximum value. The transformation coefficients clipped by the first clipper 25 may be stored in a first buffer 255.

The first 1D inverse transformer 26 generates first intermediate data by performing first 1D inverse transformation on the transformation coefficients received from the first buffer 255. The first 1D inverse transformer 26 may perform 1D inverse transformation in a vertical frequency direction. The second clipper 27 may clip the first intermediate data generated by the first 1 D inverse transformer 26 to be within a range of a second maximum value and a second minimum value. The second minimum value may be a minimum negative value corresponding to the second maximum value. The first intermediate data clipped by the second clipper 27 may be stored in a second buffer 275.

The second 1 D inverse transformer 28 may generate second intermediate data by performing second 1 D inverse transformation on the first intermediate data received from the second buffer 275. The second intermediate data may be 2D inverse-transformed data generated by performing 1D inverse transformation twice. 2D inverse-transformed data generated by the second 1 D inverse transformer 28 may be stored in a third buffer 295.

Accordingly, according to the inverse transformation process, the first clipper 25 performs first clipping after the inverse quantizer 24 and the second clipper 27 performs second clipping after the first 1 D inverse transformation of the first 1 D inverse transformer 26, and thus clipping may be performed total twice.

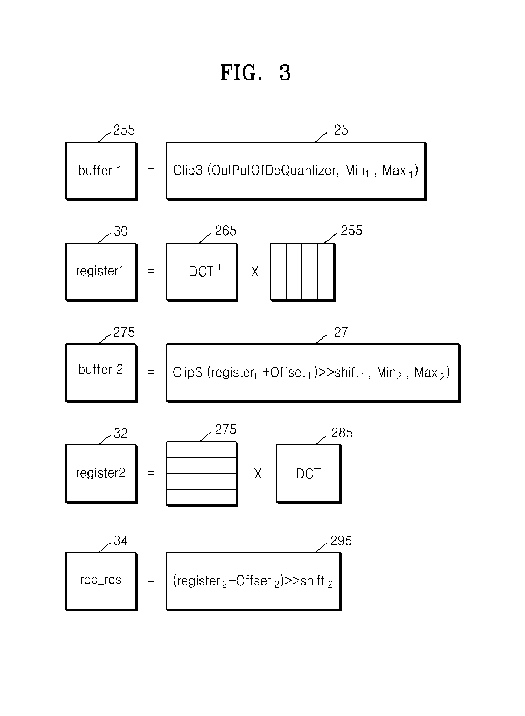

A method of determining the first maximum value of the first clipping by the first clipper 25 after the inverse quantization and a method of determining the second maximum value of the second clipping by the second clipper 27 after the first 1 D inverse transformation will now be described with reference to FIG. 3.

FIG. 3 illustrates a storage process of data generated during the inverse transformation process of FIG. 2.

A clipping function 'Clip3 is a function where a value smaller than 'Min1' is replaced by 'Min1', a value higher than 'Max1' is replaced by 'Max1', and a value between 'Min1' and 'Max1' is maintained, from among 'OutPutOfDeQuantizer'. Accordingly, the first clipper 25 clips transformation coefficients that are output data (OutPutOfDeQuantizer) of the inverse quantizer 24 to a range of a first minimum value (Min1) and a first maximum value (Max1). The transformation coefficients clipped by the first clipper 25 may be stored in the first buffer 255.

The first 1 D inverse transformer 26 may generate first intermediate data by multiplying the transformation coefficients stored in the first buffer 255 to a 1 D discrete cosine transform (DCT) matrix 265 in a vertical frequency direction, and store the first intermediate data in a first register 30.

In Formulas (i), (ii), and (iii) below, coeffQ denotes transformation coefficients clipped by the first clipper 25, TrMatrix(H) denotes the 1 D DCT matrix 265 in the vertical frequency direction of the first 1 D inverse transformer 26, and register1 denotes the first intermediate data stored in the first register 30.

$$\text{register1} = \text{TrMatrix(H)}^T \times \text{coeffQ} \quad \dots \quad \text{(i)}$$

$$|\text{coeffQ}| \leq \text{Max1} \quad \dots \quad \text{(ii)}$$

$$|register1| \leq NormL1(H)*Max1 \quad \ldots \quad (iii)$$

In other words, Formula (i) denotes a 1 D inverse transformation operation in the vertical frequency direction of the first 1 D inverse transformer 26, and Formula (ii) denotes a clipping range of the first clipper 25. Since a range of transformation coefficients is limited between the first maximum value (Max1) and the first minimum value (Min1) by the first clipper 25, an absolute value of the first intermediate data (register1) in Formula (iii) may also be limited to be lower than or equal to NormL1(H)*Max1.

NormL1(H) is a L1-norm value of the 1D DCT matrix 265 in the vertical frequency direction. The L1-norm value of the 1 D DCT matrix 265 in the vertical frequency direction may indicate a length of the 1 D DCT matrix 265 in the vertical frequency direction. In order to determine a L1-norm value of a matrix, a sum of absolute values of elements is determined per row of the matrix, and a maximum value from among the sum may be determined to be the L1-norm value of the matrix.

Accordingly, a maximum value of the first intermediate data generated by multiplying the 1D DCT matrix 265 in the vertical frequency direction to the clipped transformation coefficients may be determined to be a product (NormL1(H)*Max1) of the L1-norm value (NormL1(H)) of the 1D DCT matrix 265 and the maximum value (Max1) of the clipped transformation coefficients (Formula (iii)).

The first 1D inverse transformer 26 may perform de-scaling on the first intermediate data generated via 1D inverse transformation in the vertical frequency direction. The first 1D inverse transformer 26 may de-scale the first intermediate data by applying a first offset (offset1) to the first intermediate data and then performing a bitwise right-shift, after first 1D DCT of the first 1D inverse transformer 26. Formula (iv) represents a de-scaling operation of the first 1 D inverse transformer 26.

$$(register1+offset1) >> shift1 \quad \ldots \quad (iv)$$

A bit number (shift1) of a first bitwise-shift for the de-scaling after the first 1D inverse transformation may be 7, and the first offset may be a result value ((1<<(shift1-1)) obtained by bitwise-shifting 1 to left by a bit number obtained by subtracting 1 bit from the bit number of the first bitwise-shift.

When Formula (iv) and Formula (iii) are combined, a range of the de-scaled first intermediate data (temp) may be determined as shown in Formula (v) below.

$$|temp| \leq (NormL1(H)*Max1+offset1) >> shift1 \quad \ldots \quad (v)$$

Also, the second clipper 27 may clip the de-scaled first intermediate data to a range of a second minimum value (Min2) and a second maximum value (Max2). The first intermediate data clipped by the first clipper 25 may be stored in the second buffer 275.

A clipping operation of the second clipper 27 may be represented by Formula (vi) below.

$$|temp| \leq Max2 \quad \ldots \quad (vi)$$

The second 1 D inverse transformer 28 may generate second intermediate data by multiplying the transformation coefficients stored in the second buffer 275 to a 1 D DCT matrix 285 in a horizontal frequency direction, and store the second intermediate data in a second register 32.

Since Max2 denotes the second maximum value of the first intermediate data clipped by the first 1 D inverse transformer 26 and the first clipper 25, and TrMatrix(W) denotes the 1 D DCT matrix 285 in the horizontal frequency direction of the second 1D inverse transformer 28, a maximum value of the second intermediate data (register2) to be stored in the second register 32 may be determined according to Formula (vii) below.

$$|register2| \leq NormL1(W)*Max2 \quad \ldots \quad (vii)$$

Here, NormL1(W) denotes a L1-norm value of the 1D DCT matrix 285 in the horizontal frequency direction.

The second 1 D inverse transformer 28 may also perform de-scaling on the second intermediate data generated via 1 D DCT in the horizontal frequency direction. The second 1 D inverse transformer 28 may apply a second offset (offset2) to the second intermediate data (register2) and then perform bitwise right-shift, so as to de-scale the second intermediate data. Formula (viii) below represents a de-scaling operation of the second 1 D inverse transformer 28.

$$(register2+offset2) \gg shift2 \quad \dots \quad (viii)$$

A bit number (shift2) of a second bitwise-shift for de-scaling after second 1D DCT may be determined according to an internal bit depth (B). For example, the shift2 may be determined to be '12-(B-8)'. The second offset (offset2) may be a result value $(1 \ll (shift2-1))$ obtained by bitwise-shifting 1 to left by a bit number obtained by subtracting 1 bit from the bit number of the second bitwise-shift.

The second 1 D inverse transformer 28 may store the second intermediate data de-scaled according to Formula (viii) in the third buffer 295. Also, since the second intermediate data is 2D inverse-transformed data as 1 D inverse transformation is performed twice, the second intermediate data may be restored residual data 34. Residual data is differential data of pixel values between a current block and another block. Accordingly, de-scaled and 2D inverse-converted data stored in the third buffer 295 may be the restored residual data 34.

When Formula (viii) and Formula (vii) are combined, a range (rec-res) of the de-scaled and 2D inverse-transformed data, i.e., the restored residual data 34, may be determined according to Formula (ix) below.

$$|rec\_res| \le (NormL1(W)*Max2+offset2) \gg shift2 \quad \dots \quad (ix)$$

Here, a size of the second intermediate data (register2) stored in the second register 32 is limited to a maximum value (MaxInt) of data storable in the second register 32. Also, the range (rec-res) of the restored residual data 34 stored in the third buffer 295 is also limited to a maximum value (Maxshort) of data storable in the third buffer 295.

For example, when the second register 32 is a 32-bit register where maximum 32-bit data is storable, the maximum value (MaxInt) of the data storable in the second register 32 is $(2^{31}-1)$. When the third buffer 295 is a 16-bit buffer where maximum 16-bit data is storable, the maximum value (MaxShort) of the data storable in the third buffer 295 may be $(2^{15}-1)$.

Accordingly, the second intermediate data (register2) stored in the second register 32 and the range (rec_res) of the restored residual data 34 stored in the third buffer 295 may be respectively determined by Formulas (x) and (xi) below.

$$|register2| \le 2^{31}-1=MaxInt \quad \dots \quad (x)$$

$$|rec\_res| \le 2^{15}-1=MaxShort \quad \dots \quad (xi)$$

Accordingly, when Formulas (vii) and (ix) and Formulas (x) and (xi) are combined, the second maximum value (Max2) may be determined according to Formula (xii) below.

$$Max2=Min\{(MaxShort*2^{(shift2)})/NormL1(W), MaxInt/(NormL1(W))\} \quad \dots \quad (xii)$$

The second maximum value (Max2) may be determined to be a smaller value $(Min(\alpha, \beta))$ from among a value $(\alpha)$ obtained by dividing a de-scaled bitwise-shifted value of the maximum value (MaxShort) of the data storable in the third buffer 295 by the bit number (shift2) by the length (NormL1(W)) of the 1 D inverse transformation matrix 285 in the horizontal frequency direction, and a value $(\beta)$ obtained by dividing the maximum value (MaxInt) of the data storable in the second register 32 by the length (NormL1(W)) of the 1D inverse transformation matrix 285 in the horizontal frequency direction.

Specifically, the bit number (shift2) for de-scaling on the 1D inverse-transformed data in the horizontal frequency direction may be determined according to the internal bit depth (B). Accordingly, since the maximum values (MaxShort and MaxInt) are all fixed constants, the second maximum value (Max2) of the second clipper 27 may be determined based on the length (NormL1(W)) of the 1D inverse transformation matrix 285 in the horizontal frequency direction and the internal bit depth (B).

Similarly, the size of the intermediate data (register1) stored in the first register 30 is limited by the maximum value (MaxInt) of the data storable in the first register 30. Also, the size of the clipped first intermediate data (temp) stored in the second buffer 275 is limited by the maximum value (MaxShort) of the data storable in the second buffer 275. The size of the first intermediate data (register1) stored in the first register 30 and the range of the clipped first intermediate data (temp) stored in the second buffer 275 may be determined according to Formulas (xiii) and (xiv) below.

$$|register1| \leq MaxInt \quad \ldots \quad (xiii)$$

$$|temp| \leq MaxShort \quad \ldots \quad (xiv)$$

Accordingly, when Formulas (xiii) and (xiv) and Formula (iii) and (v) are combined, the second maximum value (Max2) may be determined according to Formula (xv) below.

$$Max1 = Min\{(MaxShort*2^{(shift1)})/NormL1(H), MaxInt/(NormL1(H))\} \quad \ldots \quad (xv)$$

The first maximum value may be determined to be a smaller value (Min($\gamma,\delta$)) from among a value ($\gamma$) obtained by dividing a de-scaled bitwise-shifted value of the maximum value (MaxShort) of the data storable in the second buffer 275 by the bit number (shift1) by the length (NormL1(H)) of the 1 D inverse transformation matrix in the vertical frequency direction, and a value ($\delta$) obtained by dividing the maximum value (MaxInt) of the data storable in the first register 30 by the length (NormL1(H)) of the 1 D inverse transformation matrix in the vertical frequency direction.

Accordingly, since MaxShort, shift1, and MaxInt are all fixed constants, the first maximum value (Max1) of the first clipper 25 may be determined based on the length (NormL1(H)) of the 1 D inverse transformation matrix in the vertical frequency direction.

Accordingly, when a 32-bit register and a 16-bit buffer are used, and the first clipper 25 performs clipping on the inverse-quantized transformation coefficients according to the first maximum value (Max1) determined according to Formula (xv), and the second clipper 27 performs clipping on the first 1 D inverse-transformed data according to the second maximum value (Max2) determined according to Formula (xii), data generated during first and second 1 D inverse transformation processes may be within data ranges of the 32-bit register and the 16-bit buffer.

Accordingly, by performing clipping only after inverse quantization and 1 D inverse transformation without having to clip temporary data whenever the temporary data is generated, overflows of registers where output data of first and second inverse transformations are stored may be prevented with minimum clipping.

In order to inverse-transform blocks having sizes of 4x4, 8x8, 16x16, and 32x32, the inverse transformation apparatus 10 may use inverse transformation matrixes having sizes of 4, 8, 16, and 32 corresponding to the sizes of the blocks and use different inverse transformation matrixes according to sizes of blocks. Also, a uniform inverse transformation matrix may be selected for blocks having the same size. Since the first maximum value (Max1) of the first clipper 25 is determined based on the length (NormL1) of the 1 D inverse transformation matrix of the first 1 D inverse transformer 26, it may be understood that the first maximum value (Max1) is determined according to the size of block targeted by the inverse transformation matrix.

Similarly, since the second maximum value (Max2) of the second clipper 27 is determined based on the length of the 1 D inverse transformation matrix of the second 1 D inverse transformer 28 and the internal bit depth (B), the second maximum value (Max2) may be determined according to the size of block to be inverse-transformed and the internal bit depth (B).

The inverse transformation apparatus 10 may use inverse transformation matrixes where lengths (NormL1(Size)) of inverse transformation matrixes selected according to sizes of blocks differ according to Table 11 below.

[Table 11]

| Transform | invDST4 | ibnvDCT4 | invDCT8 | invDCT16 | invDCT32 |
|---|---|---|---|---|---|
| NormL1(Size) | 242 | 247 | 479 | 940 | 1862 |

invDST4, invDCT4, invDCT8, invDCT16, and invDCT32 respectively indicate an inverse discrete sine transform (DST) matrix having a size of 4 for a 4x4 block, an inverse DCT matrix having a size of 4 for a 4x4 bock, an inverse DCT matrix having a size of 8 for an 8x8 block, an inverse DCT matrix having a size of 16 for a 16x16 block, and an inverse DCT matrix having a size of 32 for a 32x32 block. Accordingly, the length (NormL1(Size)) of the inverse transformation matrix differs according to the size of the block to be inverse-transformed, i.e., according to the size of the inverse transformation matrix.

When the inverse transformation matrixes according to Table 11 are used, the inverse transformation apparatus 10 may determine the first maximum value (Max1) indicating a clipping range after inverse quantization according to Table 12 below.

[Table 12]

| Size | 4(DST) | 4(DCT) | 8 | 16 | 32 |
|------|--------|--------|-----|-----|-----|
| Max$_1$ | 32767 | 32767 | 32767 | 32767 | 32767 |

Also, the inverse transformation apparatus 10 according to Table 11 may determine the second maximum value (Max2) indicating a clipping range after 1D inverse transformation in a horizontal frequency direction, according to Table 13 below.

[Table 13]

| Internal bit depth B | 4(DST) | 4(DCT) | 8 | 16 | 32 |
|------|--------|--------|-----|-----|-----|
| 14 | 8665 | 8490 | 4378 | 2230 | 1126 |
| 13 | 17331 | 16980 | 8756 | 4461 | 2252 |
| 12 | 32767 | 32767 | 17512 | 8923 | 4505 |
| 11 | 32767 | 32767 | 32767 | 17847 | 9010 |
| 10 | 32767 | 32767 | 32767 | 32767 | 18020 |
| 9 | 32767 | 32767 | 32767 | 32767 | 32767 |
| 8 | 32767 | 32767 | 32767 | 32767 | 32767 |

In other words, the inverse transformation apparatus 10 according to Table 11 may individually determine the second maximum values (Max2) indicating the clipping ranges after the 1D inverse transformation in the horizontal frequency direction based on the size of the inverse transformation matrix, i.e., the size of the current block and the internal bit depth (B).

Alternatively, the inverse transformation apparatus 10 may use inverse transformation matrixes wherein lengths (NormL1(Size)) of inverse transformation matrixes selected according to sizes of blocks differ according to Table 14 below.

[Table 14]

| Transform | invDST4 | ibnvDCT4 | invDCT8 | invDCT16 | invDCT32 |
|------|--------|--------|-----|-----|-----|
| NormL1(Size) | 15488 | 15808 | 30622 | 30622 | 119262 |

According to Table 14, the lengths (NormL1(Size)) of the inverse transformation matrixes differ according to the sizes of the inverse transformation matrixes.

When the inverse transformation matrixes according to Table 14 are used, the inverse transformation apparatus 10 may determine the first maximum value (Max1) indicating the clipping range after the inverse quantization according to Table 15 below.

[Table 15]

| Size | 4(DST) | 4(DCT) | 8 | 16 | 32 |
|------|--------|--------|-----|-----|-----|
| Max$_1$ | 32767 | 32767 | 32767 | 32767 | 18006 |

In other words, the inverse transformation apparatus 10 according to Table 14 may individually determine the first maximum values (Max1) indicating the clipping ranges after the 1D inverse transformation in the vertical frequency direction according to Table 15, based on the sizes of the inverse transformation matrixes, i.e., the sizes of the blocks.

Also, the inverse transformation apparatus 10 according to Table 14 may determine the second maximum value (Max2) indicating the clipping range after the 1D inverse transformation in the horizontal frequency direction according to Table 16 below.

[Table 16]

| Internal bit depth B | 4(DST) | 4(DCT) | 8 | 16 | 32 |
|---|---|---|---|---|---|
| 14 | 8665 | 8490 | 4382 | 2224 | 1125 |
| 13 | 17331 | 16980 | 8765 | 4449 | 2250 |
| 12 | 32767 | 32767 | 17531 | 8899 | 4501 |
| 11 | 32767 | 32767 | 32767 | 17798 | 9002 |
| 10 | 32767 | 32767 | 32767 | 32767 | 18005 |
| 9 | 32767 | 32767 | 32767 | 32767 | 18006 |
| 8 | 8665 | 8490 | 4382 | 2224 | 1125 |

In other words, the inverse transformation apparatus 10 according to Table 14 may individually determine the second maximum values (Max2) indicating the clipping ranges after the 1D inverse transformation in the horizontal frequency direction according to Table 16, based on the sizes of the inverse transformation matrixes, i.e., the sizes of the blocks, and the internal bit depth (B).

Also, as described above, the first minimum value from among the first maximum and minimum values of the clipping range with respect to the inverse-quantized transformation coefficients may be a minimum negative value corresponding to the first maximum value. Accordingly, when the first and second maximum values are 32767, the first and second minimum values may be determined to be -32768. In this case, clipping functions of the first and second clippers 25 and 27 of FIG. 3 may respectively be Clip3(OutPutofDeQunatizer, -32768, 32767) and Clip3((register1+offset1)>>shift1, -32768, 32767).

Also, when a transformation coefficient (OutPutofDeQunatizer) of which a data range is extended by the internal bit depth (B) is input to the first clipper 25, the first clipper 25 may de-scale the transformation coefficient considering the internal bit depth and then clip the de-scaled transformation coefficient to the first and second minimum values of -32768.

Also, when the bit number (shift1) of the first bitwise-shift for de-scaling the scaled transformation coefficients after the first inverse transformation is 7 and the first offset (offset1) is 1<<(shift1-1), i.e., 2^6=64, the clipping function of the second clipper 27 may be Clip3((register1+64)>>7, -32768, 32767). FIG. 4 is a flowchart illustrating an inverse transformation method according to an embodiment. In operation 41, quantized transformation coefficients of a current block are received.

In operation 43, transformation coefficients are generated by inverse-quantizing the quantized transformation coefficients, and are clipped to a range of a first maximum value and a first minimum value. The range of the first maximum value and the first minimum value may be determined based on a size of a current block. For example, a length of a first inverse transformation matrix may be determined to be an L1-norm value of an inverse transformation matrix in a vertical frequency direction, and a length of a second inverse transformation matrix may be determined to be an L1-norm value of an inverse transformation matrix in a horizontal frequency direction.

In operation 45, first inverse transformation is performed by using the transformation coefficients clipped in operation 43 by using the first inverse transformation matrix, and intermediate data generated via the first inverse transformation is clipped to a range of a second maximum value and a second minimum value. The range of the second maximum value and the second minimum value may be determined based on the size of the current block and an internal bit depth.

In operation 47, second inverse transformation may be performed on the intermediate data clipped in operation 45, by using a second inverse transformation matrix.

The first inverse transformation matrix may be a 1 D inverse transformation matrix in a vertical frequency direction, and the second inverse transformation matrix may be a 1 D inverse transformation matrix in a horizontal frequency direction. A length of the first inverse transformation matrix and a length of the second inverse transformation matrix may be determined based on the size of the current block.

In operation 45, intermediate data generated via the first inverse transformation may be stored in a first storage unit and the clipped intermediate data may be stored in a second storage unit.

Here, the first maximum value of the clipping range in operation 43 may be determined by using a maximum value (first storage maximum value) of data storable in the first storage unit, a maximum value (second storage maximum value) of data storable in the second storage unit, and the length of the first inverse transformation matrix. A smaller value from among a value obtained by dividing a de-scaling bitwise-shifted value of the second storage maximum value by the length of the first inverse transformation matrix, and a value obtained by dividing the first storage maximum value by the length of the first inverse transformation matrix may be determined as the first maximum value.

Also, the second maximum value of the clipping range in operation 45 may be determined by using the first storage maximum value, the second storage maximum value, the length of the second inverse transformation matrix, and an internal matrix. A smaller value from among a value obtained by dividing a de-scaling bitwise-shifted value of the second storage maximum value considering the internal bit depth by the length of the second inverse transformation matrix, and a value obtained by dividing the first storage maximum value by the length second inverse transformation matrix may be determined as the second maximum value.

Video encoding and decoding methods and video encoding and decoding apparatuses, which involve the inverse transformation method, according to embodiments of the present invention, will now be described with reference to FIGS. 5 through 8.

FIG. 5 is a block diagram of a video decoding apparatus 50 including the inverse transformation apparatus 10, according to an embodiment. FIG. 6 is a flowchart illustrating a video decoding method performed by the video decoding apparatus 50, according to an embodiment.

The video decoding apparatus 50 includes a receiver 52, the inverse transformation apparatus 10, and a prediction decoder 54.

In operation 61, the receiver 52 receives a bitstream and extracts quantized transformation coefficients of a current block by parsing the bitstream and performing entropy decoding.

In operation 62, the inverse transformation apparatus 10 may generate transformation coefficients by performing inverse quantization on the quantized transformation coefficients of the current block extracted by the receiver 52, and clip the transformation coefficients to a range of a first maximum value and a first minimum value.

The range of the first maximum value and the first minimum value may be determined based on a size of a first inverse transformation matrix, i.e., a 1 D inverse transformation matrix in a vertical frequency direction. Also, since the size of the 1 D inverse transformation matrix corresponds to a size of the current block, the range of the first maximum value and the first minimum value may be determined based on the size of the current block.

In operation 63, the inverse transformation apparatus 10 may generate intermediate data by performing first inverse transformation on the clipped transformation coefficients. The first inverse transformation performed on the transformation coefficients may be inverse transformation using a 1 D inverse transformation matrix in a vertical frequency direction. In operation 63, the intermediate data generated via the first inverse transformation may be clipped to a range of a second maximum value and a second minimum value.

The range of the second maximum value and the second minimum value may be determined based on a size of a second inverse transformation matrix, i.e., a 1 D inverse transformation matrix in a horizontal frequency direction, and an internal bit depth. Also, since the size of the 1 D inverse transformation matrix corresponds to the size of the current block, the range of the second maximum value and the second minimum value may be determined based on the size of the current block and the internal bit depth.

In operation 64, the inverse transformation apparatus 10 may generate restored residual data of the current block by performing second inverse transformation on the intermediate data clipped in operation 63. The second inverse transformation performed on the intermediate data may be inverse transformation using the 1 D inverse transformation matrix in the horizontal frequency direction.

In operation 65, the prediction decoder 54 may perform intra prediction decoding or motion compensation on the restored residual data of the current block generated via the second inverse transformation in operation 64. Image data of the current block may be restored via the intra prediction decoding or motion compensation.

The prediction decoder 54 may perform the intra prediction decoding or motion compensation by using residual data of which a data range is extended by the internal bit depth. Accordingly, after the intra prediction decoding or motion compensation is completed, the data range may be reduced by the internal bit depth to restore the image data of the current block.

The receiver 52 may extract the quantized transformation coefficients according to blocks, the inverse transformation apparatus 10 may decode residual data of a spatial domain by performing 2D inverse transformation according to the blocks, and the prediction decoder 54 may restore image data of the blocks by performing intra prediction or motion compensation using residual data according to the blocks. As such, an image including the blocks may be restored as the video decoding apparatus 50 decodes the blocks, and a video including an image sequence may be restored as the images are restored.

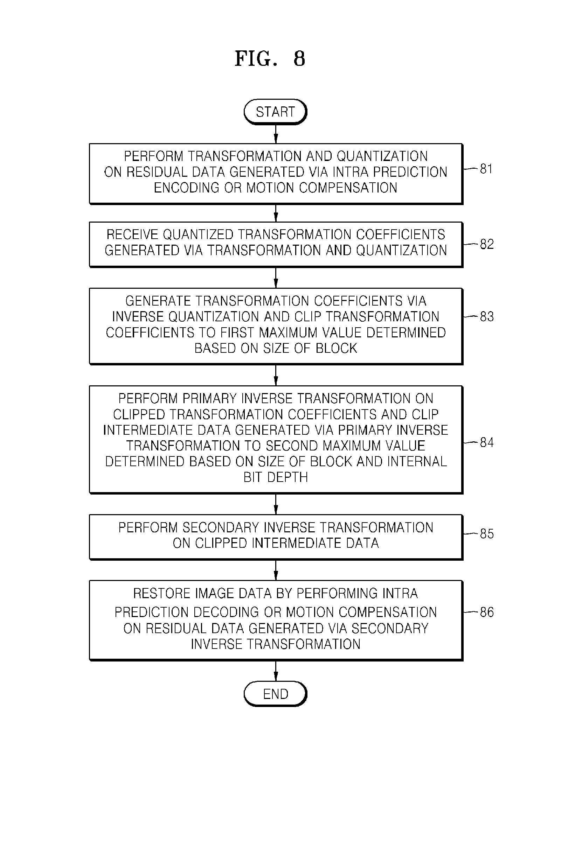

FIG. 7 is a block diagram of a video encoding apparatus 70 including the inverse transformation apparatus 10, according to an embodiment. FIG. 8 is a flowchart illustrating a video encoding method performed by the video encoding apparatus 70, according to an embodiment.

The video encoding apparatus 70 include an encoder 72, the inverse transformation apparatus 10, and a prediction decoder 74.

The inverse transformation apparatus 10 may generate samples by performing intra prediction, inter prediction, transformation, and quantization according to image blocks, and perform entropy encoding on the samples to output a bitstream.

In operation 81, the encoder 72 generates residual data of a current block via intra prediction encoding or motion prediction, and performs transformation and quantization on the residual data. The encoder 72 may generate transformation coefficients by performing transformation on the residual data. The inverse quantizer 12 may generate quantized transformation coefficients, i.e., quantized coefficients, by performing quantization on the transformation coefficients.

In operation 82, the inverse transformation apparatus 10 receives the quantized transformation coefficients generated by the encoder 72.

In operation 83, the inverse transformation apparatus 10 may perform inverse quantization on the quantized transformation coefficients, and clip the transformation coefficients generated via the inverse quantization to a range of a first maximum value and a first minimum value. The inverse transformation apparatus 10 may determine the range of the first maximum value and the first minimum value based on a size of a 1D inverse transformation matrix in a vertical frequency direction, i.e., a size of the current block.

In operation 84, the inverse transformation apparatus 10 may generate intermediate data by performing first inverse transformation on the clipped transformation coefficients by using the 1D inverse transformation matrix in the vertical frequency direction. In operation 84, intermediate data generated via the first inverse transformation may be clipped to a range of a second maximum value and a second minimum value.

The inverse transformation apparatus 10 may determine the range of the second maximum value and the second minimum value based on a size of a 1D inverse transformation matrix in a horizontal frequency direction, i.e., the size of the current block, and an internal bit depth.

In operation 85, the inverse transformation apparatus 10 may generate restored residual data of the current block by performing second inverse transformation on the intermediate data clipped in operation 84 by using the 1 D inverse transformation matrix in the horizontal frequency direction.

In operation 86, the prediction decoder 74 may perform intra prediction decoding or motion compensation on the restored residual data of the current block generated via the second inverse transformation in operation 85. Image data of the current block may be restored via the intra prediction decoding or motion compensation.

Also, the prediction decoder 74 may perform intra prediction decoding or motion compensation by using residual data of which a data range is extended by the internal bit depth. Accordingly, the image data of the current block may be restored by reducing the data range by the internal bit depth after the intra prediction decoding and motion compensation.

Also, when the encoder 72 performs the intra prediction or motion compensation in operation 81 on a following block, the image data of the current block restored in operation 86 may be referred to. During intra prediction or motion prediction, a reference image obtained by extending the restored image data by the internal bit depth may be used.

As such, overflows of registers where data generated after first and second inverse transformations is stored may be prevented since the video decoding apparatus 50 and the video encoding apparatus 70, which include the inverse transformation apparatus 10, respectively pre-clip input data of the first and second inverse transformations during a video decoding process. Also, overflows of output data of the first and second inverse transformations may be prevented with a minimum clipping by performing clipping only after inverse quantization and first inverse transformation without having to progressively perform clipping.

As described above, in the inverse transformation apparatus 10, blocks into which video data is split may split into coding units of a tree structure, and transformation units for transformation and inverse transformation with respect to a coding unit may be used. Hereinafter, a video encoding method and a video encoding apparatus, and a video decoding method and a video decoding apparatus based on a coding unit of a tree structure and a transformation unit, according to embodiments of the present invention will be described with reference to FIGS. 9 through 22.

FIG. 9 is a block diagram of a video encoding apparatus 100 based on a coding unit according to a tree structure, according to an embodiment of the present invention.

The video encoding apparatus 100 involving video prediction based on a coding unit according to a tree structure includes a maximum coding unit splitter 110, a coding unit determiner 120, and an output unit 130. Hereinafter, for convenience of description, the video encoding apparatus 100 involving video prediction based on a coding unit according to a tree structure is referred to as 'the video encoding apparatus 100'.

The maximum coding unit splitter 110 may split a current picture based on a maximum coding unit for the current picture of an image. If the current picture is larger than the maximum coding unit, image data of the current picture may be split into the at least one maximum coding unit. The maximum coding unit according to an embodiment of the present invention may be a data unit having a size of 32x32, 64x64, 128x128, 256x256, etc., wherein a shape of the data unit is a square having a width and length in squares of 2. The image data may be output to the coding unit determiner 120 according to the at least one maximum coding unit.

A coding unit according to an embodiment may be characterized by a maximum size and a depth. The depth denotes a number of times the coding unit is spatially split from the maximum coding unit, and as the depth deepens, deeper encoding units according to depths may be split from the maximum coding unit to a minimum coding unit. A depth of the maximum coding unit is an uppermost depth and a depth of the minimum coding unit is a lowermost depth. Since a size of a coding unit corresponding to each depth decreases as the depth of the maximum coding unit deepens, a coding unit corresponding to an upper depth may include a plurality of coding units corresponding to lower depths.

As described above, the image data of the current picture is split into the maximum coding units according to a maximum size of the coding unit, and each of the maximum coding units may include deeper coding units that are split according to depths. Since the maximum coding unit according to an embodiment is split according to depths, the image data of a spatial domain included in the maximum coding unit may be hierarchically classified according to depths.

A maximum depth and a maximum size of a coding unit, which limit the total number of times a height and a width of the maximum coding unit are hierarchically split may be predetermined.

The coding unit determiner 120 encodes at least one split region obtained by splitting a region of the maximum coding unit according to depths, and determines a depth to output a finally encoded image data according to the at least one split region. In other words, the coding unit determiner 120 determines a coded depth by encoding the image data in the deeper coding units according to depths, according to the maximum coding unit of the current picture, and selecting a depth having the least encoding error. Thus, the encoded image data of the coding unit corresponding to the determined coded depth is finally output. Also, the coding units corresponding to the coded depth may be regarded as encoded coding units. The determined coded depth and the encoded image data according to the determined coded depth are output to the output unit 130.

The image data in the maximum coding unit is encoded based on the deeper coding units corresponding to at least one depth equal to or below the maximum depth, and results of encoding the image data are compared based on each of the deeper coding units. A depth having the least encoding error may be selected after comparing encoding errors of the deeper coding units. At least one coded depth may be selected for each maximum coding unit.

The size of the maximum coding unit is split as a coding unit is hierarchically split according to depths, and as the number of coding units increases. Also, even if coding units correspond to the same depth in one maximum coding unit, it is determined whether to split each of the coding units corresponding to the same depth to a lower depth by measuring an encoding error of the image data of the each coding unit, separately. Accordingly, even when image data is included in one maximum coding unit, the image data is split into regions according to the depths and the encoding errors may differ according to regions in the one maximum coding unit, and thus the coded depths may differ according to regions in the image data. Thus, one or more coded depths may be determined in one maximum coding unit, and the image data of the maximum coding unit may be divided according to coding units of at least one coded depth.

Accordingly, the coding unit determiner 120 may determine coding units having a tree structure included in the maximum coding unit. The 'coding units having a tree structure' according to an embodiment of the present invention include coding units corresponding to a depth determined to be the coded depth, from among all deeper coding units included in the maximum coding unit. A coding unit of a coded depth may be hierarchically determined according to depths in the same region of the maximum coding unit, and may be independently determined in different regions. Similarly, a coded depth in a current region may be independently determined from a coded depth in another region.

A maximum depth according to an embodiment of the present invention is an index related to the number of times splitting is performed from a maximum coding unit to a minimum coding unit. A first maximum depth according to an embodiment of the present invention may denote the total number of times splitting is performed from the maximum coding unit to the minimum coding unit. A second maximum depth according to an embodiment of the present invention may denote the total number of depth levels from the maximum coding unit to the minimum coding unit. For example, when a depth of the maximum coding unit is 0, a depth of a coding unit, in which the maximum coding unit is split once, may be set to 1, and a depth of a coding unit, in which the maximum coding unit is split twice, may be set to 2. Here, if the minimum coding unit is a coding unit in which the maximum coding unit is split four times, 5 depth levels of depths 0, 1, 2, 3 and 4 exist, and thus the first maximum depth may be set to 4, and the second maximum depth may be set to 5.

Prediction encoding and transformation may be performed according to the maximum coding unit. The prediction encoding and the transformation are also performed based on the deeper coding units according to a depth equal to or depths less than the maximum depth, according to the maximum coding unit.

Since the number of deeper coding units increases whenever the maximum coding unit is split according to depths, encoding including the prediction encoding and the transformation is performed on all of the deeper coding units generated as the depth deepens. For convenience of description, the prediction encoding and the transformation will now be described based on a coding unit of a current depth, in a maximum coding unit.

The video encoding apparatus 100 may variously select a size or shape of a data unit for encoding the image data. In order to encode the image data, operations, such as prediction encoding, transformation, and entropy encoding, are performed, and at this time, the same data unit may be used for all operations or different data units may be used for each operation.

For example, the video encoding apparatus 100 may select not only a coding unit for encoding the image data, but also a data unit different from the coding unit so as to perform the prediction encoding on the image data in the coding unit.

In order to perform prediction encoding on the maximum coding unit, the prediction encoding may be performed based on a coding unit corresponding to a coded depth, i.e., based on a coding unit that is no longer split into coding units corresponding to a lower depth. Hereinafter, the coding unit that is no longer split and becomes a basis unit for prediction encoding will now be referred to as a 'prediction unit'. A partition obtained by splitting the prediction unit may include a prediction unit or a data unit obtained by splitting at least one of a height and a width of the prediction unit. The partition is a data unit obtained by dividing the prediction unit of the coding unit and the prediction unit may be a partition having the same size as the coding unit.

For example, when a coding unit of 2Nx2N (where N is a positive integer) is no longer split and becomes a prediction unit of 2Nx2N, a size of a partition may be 2Nx2N, 2NxN, Nx2N, or NxN. Examples of a partition type include symmetrical partitions that are obtained by symmetrically splitting a height or width of the prediction unit, partitions obtained by asymmetrically splitting the height or width of the prediction unit, such as 1:n or n:1, partitions that are obtained by geometrically splitting the prediction unit, and partitions having arbitrary shapes.

A prediction mode of the prediction unit may be at least one of an intra mode, a inter mode, and a skip mode. For example, the intra mode or the inter mode may be performed on the partition of 2Nx2N, 2NxN, Nx2N, or NxN. Also, the skip mode may be performed only on the partition of 2Nx2N. The encoding is independently performed on one prediction unit in a coding unit, thereby selecting a prediction mode having a least encoding error.

The video encoding apparatus 100 may also perform the transformation on the image data in a coding unit based not only on the coding unit for encoding the image data, but also based on a transformation unit that is different from the coding unit. In order to perform the transformation in the coding unit, the transformation may be performed based on a data unit having a size smaller than or equal to the coding unit. For example, the transformation unit for the transformation may include a transformation unit for an intra mode and a data unit for an inter mode.

Similarly to the coding unit according to the tree structure according to the present embodiment, the transformation unit in the coding unit may be recursively split into smaller sized regions and residual data in the coding unit may be divided according to the transformation having the tree structure according to transformation depths.

According to an embodiment of the present invention, a transformation depth indicating the number of times splitting is performed to reach the transformation unit by splitting the height and width of the coding unit may also be set in the transformation unit. For example, when the size of a transformation unit of a current coding unit is 2Nx2N, a transformation depth may be set to 0. When the size of a transformation unit is NxN, the transformation depth may be set to 1. In addition, when the size of the transformation unit is N/2xN/2, the transformation depth may be set to 2. That is, the transformation unit according to the tree structure may also be set according to the transformation depth.

Encoding information according to coding units corresponding to a coded depth requires not only information about the coded depth, but also about information related to prediction encoding and transformation. Accordingly, the coding unit determiner 120 not only determines a coded depth having a least encoding error, but also determines a partition type in a prediction unit, a prediction mode according to prediction units, and a size of a transformation unit for transformation.

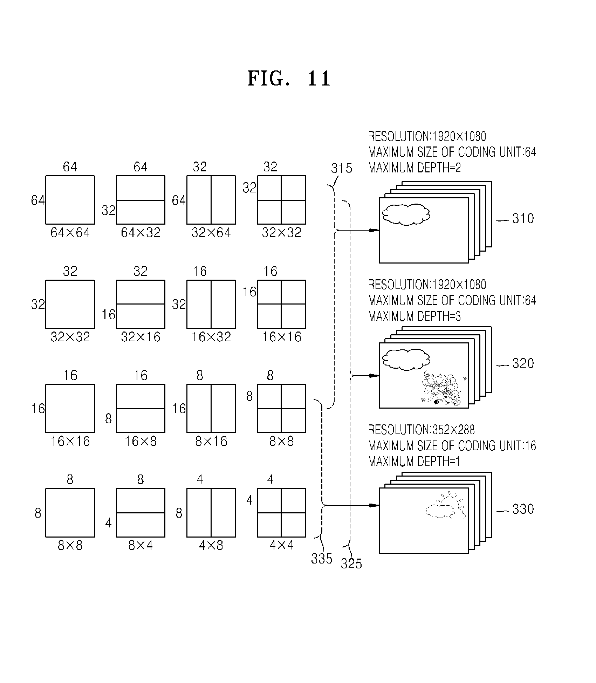

Coding units and a prediction unit/partition according to a tree structure in a maximum coding unit, and a method of determining a transformation unit, according to embodiments of the present invention, will be described in detail later with reference to FIGS. 11 through 22.

The coding unit determiner 120 may measure an encoding error of deeper coding units according to depths by using Rate-Distortion Optimization based on Lagrangian multipliers.

The output unit 130 outputs the image data of the maximum coding unit, which is encoded based on the at least one coded depth determined by the coding unit determiner 120, and information about the encoding mode according to the coded depth, in bitstreams.

The encoded image data may be obtained by encoding residual data of an image.

The information about the encoding mode according to the coded depth may include information about the coded depth, the partition type in the prediction unit, the prediction mode, and the size of the transformation unit.

The information about the coded depth may be defined by using split information according to depths, which indicates whether encoding is performed on coding units of a lower depth instead of a current depth. If the current depth of the current coding unit is the coded depth, image data in the current coding unit is encoded and output, and thus the split information may be defined not to split the current coding unit to a lower depth. Alternatively, if the current depth of the current coding unit is not the coded depth, the encoding is performed on the coding unit of the lower depth, and thus the split information may be defined to split the current coding unit to obtain the coding units of the lower depth.

If the current depth is not the coded depth, encoding is performed on the coding unit that is split into the coding unit of the lower depth. Since at least one coding unit of the lower depth exists in one coding unit of the current depth, the encoding is repeatedly performed on each coding unit of the lower depth, and thus the encoding may be recursively performed for the coding units having the same depth.

Since the coding units having a tree structure are determined for one maximum coding unit, and information about at least one encoding mode is determined for a coding unit of a coded depth, information about at least one encoding mode may be determined for one maximum coding unit. Also, a coded depth of the image data of the maximum coding unit may be different according to locations since the image data is hierarchically split according to depths, and thus information about the coded depth and the encoding mode may be set for the image data.

Accordingly, the output unit 130 may assign encoding information about a corresponding coded depth and an encoding mode to at least one of the coding unit, the prediction unit, and a minimum unit included in the maximum coding unit.

The minimum unit according to an embodiment of the present invention is a rectangular data unit obtained by splitting the minimum coding unit constituting the lowermost depth by 4. Alternatively, the minimum unit may be a maximum rectangular data unit having a maximum size, which is included in all of the coding units, prediction units, partition units, and transformation units included in the maximum coding unit.

For example, the encoding information output through the output unit 130 may be classified into encoding information according to coding units, and encoding information according to prediction units. The encoding information according to the coding units may include the information about the prediction mode and about the size of the partitions. The encoding information according to the prediction units may include information about an estimated direction of an inter mode, about a reference image index of the inter mode, about a motion vector, about a chroma component of an intra mode, and about an interpolation method of the intra mode.

Also, information about a maximum size of the coding unit defined according to pictures, slices, or GOPs, and information about a maximum depth may be inserted into a header of a bitstream, a SPS (Sequence Parameter Set) or a picture parameter set (PPS).

In addition, information about a maximum size of a transformation unit and information about a minimum size of a transformation, which are acceptable for a current video may also be output via a header of a bitstream, a SPS or a PPS. The output unit 130 may encode and output reference information, prediction information, single-direction prediction information, and information about a slice type including a fourth slice type, which are related to prediction described with reference to FIGS. 1 through 8.

In the video encoding apparatus 100, the deeper coding unit may be a coding unit obtained by dividing a height or width of a coding unit of an upper depth, which is one layer above, by two. In other words, when the size of the coding unit of the current depth is 2Nx2N, the size of the coding unit of the lower depth is NxN. Also, the coding unit of the current depth having the size of 2Nx2N may include a maximum value 4 of the coding unit of the lower depth.

Accordingly, the video encoding apparatus 100 may form the coding units having the tree structure by determining coding units having an optimum shape and an optimum size for each maximum coding unit, based on the size of the maximum coding unit and the maximum depth determined considering characteristics of the current picture. Also, since encoding may be performed on each maximum coding unit by using any one of various prediction modes and transformations, an optimum encoding mode may be determined considering characteristics of the coding unit of various image sizes.

Thus, if an image having high resolution or large data amount is encoded in a conventional macroblock, a number of macroblocks per picture excessively increases. Accordingly, a number of pieces of compressed information generated for each macroblock increases, and thus it is difficult to transmit the compressed information and data compression efficiency decreases. However, by using the video encoding apparatus 100, image compression efficiency may be increased since a coding unit is adjusted while considering characteristics of an image while increasing a maximum size of a coding unit while considering a size of the image.

The video encoding apparatus 100 of FIG. 9 may perform operations of the inverse transformation apparatus 10 and the video encoding apparatus 70 described above.

The coding unit determiner 120 may determine a prediction unit according to coding units according to a tree structure, for each maximum coding unit, and may perform prediction encoding including intra prediction or inter prediction according to prediction units, or prediction decoding including intra restoration or motion compensation.

A transformation unit may be determined according to coding units according to a tree structure, and transformation, inverse transformation, and quantization may be performed according to transformation units.

The coding unit determiner 120 may perform prediction encoding according to prediction units of a current coding unit so as to generate residual data of a current prediction unit. Also, the coding unit determiner 120 may perform transformation and quantization on the residual data of the current coding unit according to transformation units. The coding unit determiner 120 may generate transformation coefficients by performing transformation on the residual data of the current transformation unit. The coding unit determiner 120 may generate quantized transformation coefficients, i.e., quantized coefficients, by performing quantization on transformation coefficients.

The coding unit determiner 120 may perform an image decoding process to restore a reference image for prediction encoding of inter prediction or intra prediction. The image decoding process may be performed to restore the reference image for prediction encoding. Accordingly, the coding unit determiner 120 may perform inverse quantization on the quantized transformation coefficients according to transformation units, and clip the generated transformation coefficients generated via the inverse quantization to a range of a first maximum value and a first minimum value. The coding unit determiner 120 may determine the range of the first maximum value and the first minimum value based on a size of a 1 D inverse transformation matrix in a vertical frequency direction, i.e., a size of the current transformation unit.

The coding unit determiner 120 may generate intermediate data by performing first inverse transformation using the 1 D inverse transformation matrix in the vertical frequency direction, on the transformation coefficients clipped after the inverse quantization. The coding unit determiner 120 may clip the intermediate data generated via the first inverse transformation to a range of a second maximum value and a second minimum value. The coding unit determiner 120 may determine the range of the second maximum value and the second minimum value based on a size of a 1 D inverse transformation matrix in a horizontal frequency direction, i.e., the size of the current transformation unit, and an internal bit depth.

In detail, the first maximum value may be determined to be a smaller value from among i) a value obtained by dividing a de-scaling bitwise-shifted value of a second storage maximum value for storing the clipped intermediate data by a length of a first inverse transformation matrix, and ii) a value obtained by dividing a first storage maximum value for storing the intermediate data generated via the first inverse transformation by the length of the first inverse transformation matrix. The second maximum value may be determined to be a smaller value from among iii) a value obtained by dividing a de-scaled bitwise-shifted value of the second storage maximum value considering the internal bit depth by a length of a second inverse transformation matrix, and iv) a value obtained by dividing the first storage maximum value by the length of the second inverse transformation matrix.

The coding unit determiner 120 may generate restored residual data of the current transformation unit by performing second inverse transformation using the 1D inverse transformation matrix in the horizontal frequency direction, on the intermediate data clipped after the first inverse transformation.

The coding unit determiner 120 may perform intra prediction decoding or motion compensation on prediction units of the current coding unit, based on the restored residual data generated via the second inverse transformation. By performing the intra prediction decoding or the motion compensation on the prediction units, image data of the current coding unit may be restored.

A current prediction unit may be restored by determining a reference prediction unit to be referred to by a current prediction unit in a reference image, and composing the reference prediction unit and residual data of the current prediction unit. Accordingly, the coding unit determiner 120 may restore prediction units based on results of performing intra restoration or motion compensation according to prediction units, and restore a current image including the restored prediction units. The restored prediction units and the restored current image may be referred to by another prediction unit and another image.

Also, the coding unit determiner 120 may perform intra prediction decoding or motion compensation by using residual data of which a data range is extended by the internal bit depth. Accordingly, image data of the current coding unit may be restored by reducing the data range by the internal bit depth after the intra prediction decoding or the motion compensation according to the prediction units.

FIG. 10 is a block diagram of a video decoding apparatus 200 based on a coding unit according to a tree structure, according to an embodiment of the present invention.

The video decoding apparatus 200 based on the coding unit according to the tree structure includes a receiver 210, an image data and encoding information extractor 220, and an image data decoder 230. Hereinafter, for convenience of description, the video decoding apparatus 200 using video prediction based on a coding unit according to a tree structure will be referred to as the 'video decoding apparatus 200'.

Definitions of various terms, such as a coding unit, a depth, a prediction unit, a transformation unit, and information about various encoding modes, for decoding operations of the video decoding apparatus 200 are identical to those described with reference to FIG. 9 and the video encoding apparatus 100.

The receiver 210 receives and parses a bitstream of an encoded video. The image data and encoding information extractor 220 extracts encoded image data for each coding unit from the parsed bitstream, wherein the coding units have a tree structure according to each maximum coding unit, and outputs the extracted image data to the image data decoder 230. The image data and encoding information extractor 220 may extract information about a maximum size of a coding unit of a current picture, from a header about the current picture, a SPS, or a PPS.

Also, the image data and encoding information extractor 220 extracts information about a coded depth and an encoding mode for the coding units having a tree structure according to each maximum coding unit, from the parsed bitstream. The extracted information about the coded depth and the encoding mode is output to the image data decoder 230. In other words, the image data in a bit stream is split into the maximum coding unit so that the image data decoder 230 decodes the image data for each maximum coding unit.

The information about the coded depth and the encoding mode according to the maximum coding unit may be set for information about at least one coding unit corresponding to the coded depth, and information about an encoding mode may include information about a partition type of a corresponding coding unit corresponding to the coded depth, about a prediction mode, and a size of a transformation unit. Also, splitting information according to depths may be extracted as the information about the coded depth.

The information about the coded depth and the encoding mode according to each maximum coding unit extracted by the image data and encoding information extractor 220 is information about a coded depth and an encoding mode determined to generate a minimum encoding error when an encoder, such as the video encoding apparatus 100, repeatedly performs encoding for each deeper coding unit according to depths according to each maximum coding unit. Accordingly, the video decoding apparatus 200 may restore an image by decoding the image data according to a coded depth and an encoding mode that generates the minimum encoding error.

Since encoding information about the coded depth and the encoding mode may be assigned to a predetermined data unit from among a corresponding coding unit, a prediction unit, and a minimum unit, the image data and encoding information extractor 220 may extract the information about the coded depth and the encoding mode according to the predetermined data units. The predetermined data units to which the same information about the coded depth and the encoding mode is assigned may be inferred to be the data units included in the same maximum coding unit.

The image data decoder 230 restores the current picture by decoding the image data in each maximum coding unit based on the information about the coded depth and the encoding mode according to the maximum coding units. In other words, the image data decoder 230 may decode the encoded image data based on the extracted information about the partition type, the prediction mode, and the transformation unit for each coding unit from among the coding units having the tree structure included in each maximum coding unit. A decoding process may include prediction including intra prediction and motion compensation, and inverse transformation. Inverse transformation may be performed according to a method of inverse orthogonal transformation or inverse integer transformation.

The image data decoder 230 may perform intra prediction or motion compensation according to a partition and a prediction mode of each coding unit, based on the information about the partition type and the prediction mode of the prediction unit of the coding unit according to coded depths.

In addition, the image data decoder 230 may read transformation unit information according to a tree structure for each coding unit so as to determine transform units for each coding unit and perform inverse transformation based on a transformation units for each coding unit, for inverse transformation for each maximum coding unit. Via the inverse transformation, a pixel value of a spatial region of the coding unit may be restored.

The image data decoder 230 may determine at least one coded depth of a current maximum coding unit by using split information according to depths. If the split information indicates that image data is no longer split in the current depth, the current depth is a coded depth. Accordingly, the image data decoder 230 may decode encoded data of at least one coding unit corresponding to each coded depth in the current maximum coding unit by using the information about the partition type of the prediction unit, the prediction mode, and the size of the transformation unit for each coding unit corresponding to the coded depth, and output the image data of the current maximum coding unit.

In other words, data units containing the encoding information including the same split information may be gathered by observing the encoding information set assigned for the predetermined data unit from among the coding unit, the prediction unit, and the minimum unit, and the gathered data units may be considered to be one data unit to be decoded by the image data decoder 230 in the same encoding mode. For each coding unit determined as described above, information about an encoding mode may be obtained so as to decode the current coding unit.

Also, the image data decoder 230 of the video decoding apparatus 200 of FIG. 10 may perform operations of the inverse transformation apparatus 10 and the video decoding apparatus 50 described above.

The image data decoder 230 may determine transformation units for inverse quantization and inverse transformation according to coding units according to a tree structure, for each maximum coding unit, and may perform inverse quantization and inverse transformation according to the transformation units. Also, the image data decoder 230 may determine prediction units for intra restoration or motion compensation according to coding units, and perform intra restoration or motion compensation according to the prediction units.

The image data decoder 230 receives quantized transformation coefficients extracted by the receiver 210. The image data decoder 230 may perform inverse quantization on the quantized transformation coefficients according to transformation units, and clip the transformation coefficients generated via the inverse quantization to a range of a first maximum value and a first minimum value. The image data decoder 230 may determine the range of the first maximum value and the first minimum value based on a size of a 1D inverse transformation matrix in a vertical frequency direction, i.e., a size of the current transformation unit.

The image data decoder 230 may generate intermediate data by performing first inverse transformation using the 1 D inverse transformation matrix in the vertical frequency direction, on the transformation coefficients clipped after the inverse quantization. The image data decoder 230 may clip the intermediate data generated via the first inverse transformation to a range of a second maximum value and a second minimum value. The image data decoder 230 may determine the range of the second maximum value and the second minimum value based on a size of a 1 D inverse transformation matrix in a horizontal frequency direction, i.e., the size of the current transformation unit, and an internal bit depth.

In detail, the first maximum value may be determined to be a smaller value from among i) a value obtained by dividing a de-scaling bitwise-shifted value of a second storage maximum value for storing the clipped intermediate data by a length of a first inverse transformation matrix, and ii) a value obtained by dividing a first storage maximum value for storing the intermediate data generated via the first inverse transformation by the length of the first inverse transformation matrix. The second maximum value may be determined to be a smaller value from among iii) a value obtained by dividing a de-scaled bitwise-shifted value of the second storage maximum value considering the internal bit depth by a length of a second inverse transformation matrix, and iv) a value obtained by dividing the first storage maximum value by the length of the second inverse transformation matrix.

The image data decoder 230 may generate restored residual data of the current transformation unit by performing second inverse transformation using the 1D inverse transformation matrix in the horizontal frequency direction, on the intermediate data clipped after the first inverse transformation.

The image data decoder 230 may perform intra prediction decoding or motion compensation on prediction units of the current coding unit, based on the restored residual data generated via the second inverse transformation. A current prediction unit may be restored by determining a reference prediction unit to be referred to by a current prediction unit in a reference image, and composing the reference prediction unit and residual data of the current prediction unit. Accordingly, the image data decoder 230 may restore prediction units based on results of performing intra restoration or motion compensation according to prediction units, and restore a current image including the restored prediction units.

Also, the image data decoder 230 may perform intra prediction decoding or motion compensation by using residual data of which a data range is extended by the internal bit depth. Accordingly, image data of the current coding unit may be restored by reducing the data range by the internal bit depth after the intra prediction decoding or the motion compensation according to the prediction units.

The video decoding apparatus 200 may obtain information about at least one coding unit that generates the minimum encoding error when encoding is recursively performed for each maximum coding unit, and may use the information to decode the current picture. In other words, the coding units having the tree structure determined to be the optimum coding units in each maximum coding unit may be decoded.

Accordingly, even if image data has high resolution and a large amount of data, the image data may be efficiently decoded and restored by using a size of a coding unit and an encoding mode, which are adaptively determined according to characteristics of the image data, by using information about an optimum encoding mode received from an encoder.

FIG. 11 is a diagram for describing a concept of coding units according to an embodiment of the present invention.

A size of a coding unit may be expressed in width x height, and may be 64x64, 32x32, 16x16, and 8x8. A coding unit of 64x64 may be split into partitions of 64x64, 64x32, 32x64, or 32x32, and a coding unit of 32x32 may be split into partitions of 32x32, 32x16, 16x32, or 16x16, a coding unit of 16x16 may be split into partitions of 16x16, 16x8, 8x16, or 8x8, and a coding unit of 8x8 may be split into partitions of 8x8, 8x4, 4x8, or 4x4.

In video data 310, a resolution is 1920x1080, a maximum size of a coding unit is 64, and a maximum depth is 2. In video data 320, a resolution is 1920x1080, a maximum size of a coding unit is 64, and a maximum depth is 3. In video data 330, a resolution is 352x288, a maximum size of a coding unit is 16, and a maximum depth is 1. The maximum depth shown in FIG. 11 denotes a total number of splits from a maximum coding unit to a minimum decoding unit.

If a resolution is high or a data amount is large, a maximum size of a coding unit may be large so as to not only increase encoding efficiency but also to accurately reflect characteristics of an image. Accordingly, the maximum size of the coding unit of the video data 310 and 320 having the higher resolution than the video data 330 may be 64.

Since the maximum depth of the video data 310 is 2, coding units 315 of the video data 310 may include a maximum coding unit having a long axis size of 64, and coding units having long axis sizes of 32 and 16 since depths are deepened to two layers by splitting the maximum coding unit twice. Meanwhile, since the maximum depth of the video data 330 is 1, coding units 335 of the video data 330 may include a maximum coding unit having a long axis size of 16, and coding units having a long axis size of 8 since depths are deepened to one layer by splitting the maximum coding unit once.

Since the maximum depth of the video data 320 is 3, coding units 325 of the video data 320 may include a maximum coding unit having a long axis size of 64, and coding units having long axis sizes of 32, 16, and 8 since the depths are deepened to 3 layers by splitting the maximum coding unit three times. As a depth deepens, detailed information may be precisely expressed.

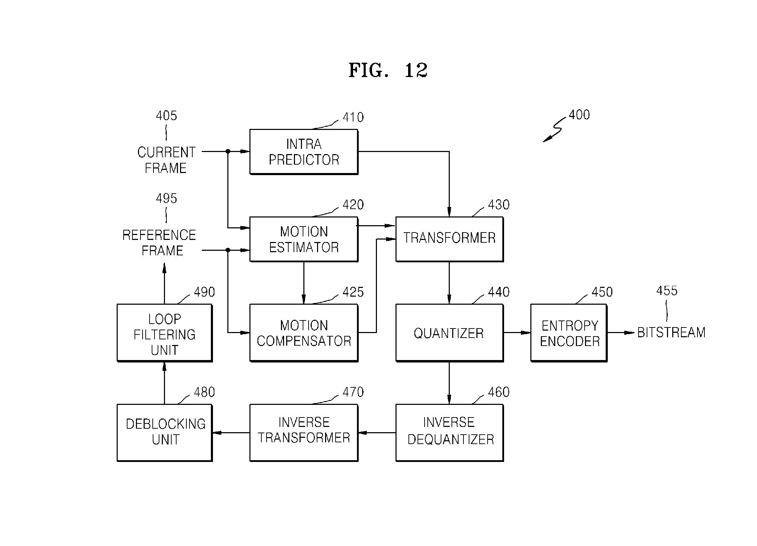

FIG. 12 is a block diagram of an image encoder 400 based on coding units, according to an embodiment of the present invention.

The image encoder 400 performs operations of the coding unit determiner 120 of the video encoding apparatus 100 to encode image data. In other words, an intra predictor 410 performs intra prediction on coding units in an intra mode, from among a current frame 405, and a motion estimator 420 and a motion compensator 425 performs inter estimation and motion compensation on coding units in an inter mode from among the current frame 405 by using the current frame 405, and a reference frame 495.

Data output from the intra predictor 410, the motion estimator 420, and the motion compensator 425 is output as a quantized transformation coefficient through a transformer 430 and a quantizer 440. The quantized transformation coefficient is restored as data in a spatial domain through an inverse quantizer 460 and an inverse transformer 470, and the restored data in the spatial domain is output as the reference frame 495 after being post-processed through a deblocking unit 480 and a loop filtering unit 490. The quantized transformation coefficient may be output as a bitstream 455 through an entropy encoder 450.

In order for the image encoder 400 to be applied in the video encoding apparatus 100, all elements of the image encoder 400, i.e., the intra predictor 410, the motion estimator 420, the motion compensator 425, the transformer 430, the quantizer 440, the entropy encoder 450, the inverse quantizer 460, the inverse transformer 470, the deblocking unit 480, and the loop filtering unit 490 perform operations based on each coding unit from among coding units having a tree structure while considering the maximum depth of each maximum coding unit.

Specifically, the intra predictor 410, the motion estimator 420, and the motion compensator 425 determines partitions and a prediction mode of each coding unit from among the coding units having a tree structure while considering the maximum size and the maximum depth of a current maximum coding unit, and the transformer 430 determines the size of the transformation unit in each coding unit from among the coding units having a tree structure.

In particular, the inverse quantizer 460 may perform inverse quantization on the quantized transformation coefficients according to transformation units, and clip the transformation coefficients generated via the inverse quantization to a range of a first maximum value and a first minimum value. The range of the first maximum value and the first minimum value may be determined based on a size of a 1 D inverse transformation matrix in a vertical frequency direction, i.e., a size of the current transformation unit.

The inverse transformer 470 may generate intermediate data by performing first inverse transformation using the 1 D inverse transformation matrix in the vertical frequency direction, on the transformation coefficients clipped after the inverse quantization. The inverse transformer 470 may clip the intermediate data generated via the first inverse transformation to a range of a second maximum value and a second minimum value. The range of the second maximum value and the second minimum value may be determined based on a size of a 1D inverse transformation matrix in a horizontal frequency direction, i.e., the size of the current transformation unit, and an internal bit depth.

In detail, the first maximum value may be determined to be a smaller value from among i) a value obtained by dividing a de-scaling bitwise-shifted value of a second storage maximum value for storing the clipped intermediate data by a length of a first inverse transformation matrix, and ii) a value obtained by dividing a first storage maximum value for storing the intermediate data generated via the first inverse transformation by the length of the first inverse transformation matrix. The second maximum value may be determined to be a smaller value from among iii) a value obtained by dividing a de-scaled bitwise-shifted value of the second storage maximum value considering the internal bit depth by a length of a second inverse transformation matrix, and iv) a value obtained by dividing the first storage maximum value by the length of the second inverse transformation matrix.

The inverse transformer 470 may generate restored residual data of the current transformation unit by performing second inverse transformation using the 1D inverse transformation matrix in the horizontal frequency direction, on the intermediate data clipped after the first inverse transformation.

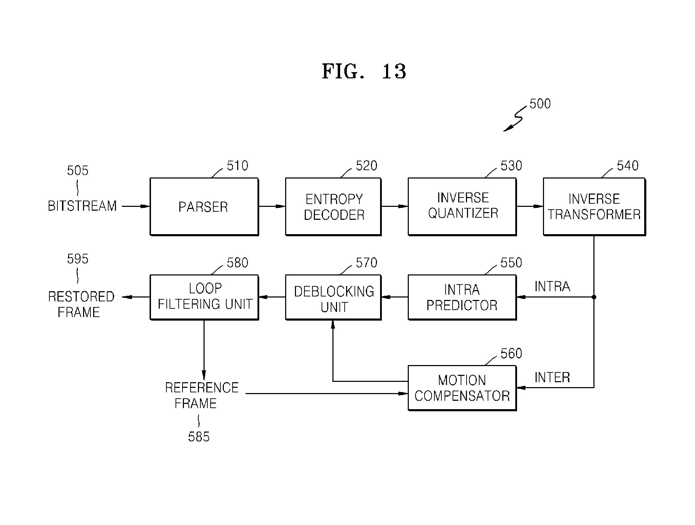

FIG. 13 is a block diagram of an image decoder 500 based on coding units, according to an embodiment of the present invention.

A parser 510 parses encoded image data to be decoded and information about encoding required for decoding from a bitstream 505. The encoded image data is output as inverse quantized data through an entropy decoder 520 and an inverse quantizer 530, and the inverse quantized data is restored to image data in a spatial domain through an inverse transformer 540.

An intra predictor 550 performs intra prediction on coding units in an intra mode with respect to the image data in the spatial domain, and a motion compensator 560 performs motion compensation on coding units in an inter mode by using a reference frame 585.

The image data in the spatial domain, which passed through the intra predictor 550 and the motion compensator 560, may be output as a restored frame 595 after being post-processed through a deblocking unit 570 and a loop filtering unit 580. Also, the image data that is post-processed through the deblocking unit 570 and the loop filtering unit 580 may be output as the reference frame 585.

In order to decode the image data in the image data decoder 230 of the video decoding apparatus 200, the image decoder 500 may perform operations that are performed after the parser 510 performs an operation.

In order for the image decoder 500 to be applied in the video decoding apparatus 200, all elements of the image decoder 500, i.e., the parser 510, the entropy decoder 520, the inverse quantizer 530, the inverse transformer 540, the intra predictor 550, the motion compensator 560, the deblocking unit 570, and the loop filtering unit 580 perform operations based on coding units having a tree structure for each maximum coding unit.

Specifically, the intra predictor 550 and the motion compensator 560 perform operations based on partitions and a prediction mode for each of the coding units having a tree structure, and the inverse transformer 540 perform operations based on a size of a transformation unit for each coding unit.

In particular, the inverse quantizer 530 may perform inverse quantization on the quantized transformation coefficients according to transformation units, and clip the transformation coefficients generated via the inverse quantization to a range of a first maximum value and a first minimum value. The range of the first maximum value and the first minimum value may be determined based on a size of a 1 D inverse transformation matrix in a vertical frequency direction, i.e., a size of the current transformation unit.

The inverse transformer 540 may generate intermediate data by performing first inverse transformation using the 1 D inverse transformation matrix in the vertical frequency direction, on the transformation coefficients clipped after the inverse quantization. The inverse transformer 540 may clip the intermediate data generated via the first inverse transformation to a range of a second maximum value and a second minimum value. The range of the second maximum value and the second minimum value may be determined based on a size of a 1 D inverse transformation matrix in a horizontal frequency direction, i.e., the size of the current transformation unit, and an internal bit depth.

In detail, the first maximum value may be determined to be a smaller value from among i) a value obtained by dividing a de-scaling bitwise-shifted value of a second storage maximum value for storing the clipped intermediate data by a length of a first inverse transformation matrix, and ii) a value obtained by dividing a first storage maximum value for storing the intermediate data generated via the first inverse transformation by the length of the first inverse transformation matrix. The second maximum value may be determined to be a smaller value from among iii) a value obtained by dividing a de-scaled bitwise-shifted value of the second storage maximum value considering the internal bit depth by a length of a second inverse transformation matrix, and iv) a value obtained by dividing the first storage maximum value by the length of the second inverse transformation matrix.

The inverse transformer 540 may generate restored residual data of the current transformation unit by performing second inverse transformation using the 1D inverse transformation matrix in the horizontal frequency direction, on the intermediate data clipped after the first inverse transformation.

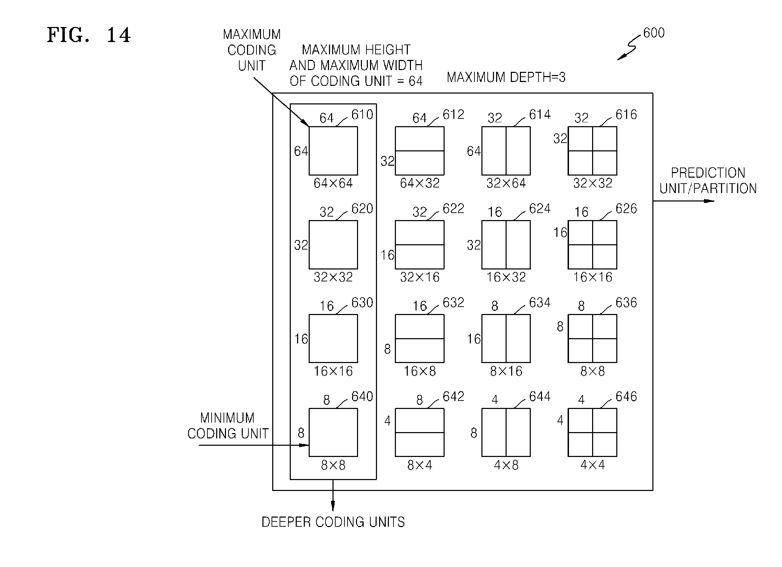

FIG. 14 is a diagram illustrating deeper coding units according to depths, and partitions, according to an embodiment of the present invention.

The video encoding apparatus 100 and the video decoding apparatus 200 use hierarchical coding units so as to consider characteristics of an image. A maximum height, a maximum width, and a maximum depth of coding units may be adaptively determined according to the characteristics of the image, or may be differently set by a user. Sizes of deeper coding units according to depths may be determined according to the predetermined maximum size of the coding unit.

In a hierarchical structure 600 of coding units, according to an embodiment of the present invention, the maximum height and the maximum width of the coding units are each 64, and the maximum depth is 3. In this case, the maximum depth refers to a total number of times the coding unit is split from the maximum coding unit to the minimum coding unit. Since a depth deepens along a vertical axis of the hierarchical structure 600, a height and a width of the deeper coding unit are each split. Also, a prediction unit and partitions, which are bases for prediction encoding of each deeper coding unit, are shown along a horizontal axis of the hierarchical structure 600.

In other words, a coding unit 610 is a maximum coding unit in the hierarchical structure 600, wherein a depth is 0 and a size, i.e., a height by width, is 64x64. The depth deepens along the vertical axis, and a coding unit 620 having a size of 32x32 and a depth of 1, a coding unit 630 having a size of 16x16 and a depth of 2, and a coding unit 640 having a size of 8x8 and a depth of 3 exist. The coding unit 640 having the size of 8x8 and the depth of 3 is a minimum coding unit.

The prediction unit and the partitions of a coding unit are arranged along the horizontal axis according to each depth. In other words, if the coding unit 610 having the size of 64x64 and the depth of 0 is a prediction unit, the prediction unit may be split into partitions included in the encoding unit 610, i.e. a partition 610 having a size of 64x64, partitions 612 having the size of 64x32, partitions 614 having the size of 32x64, or partitions 616 having the size of 32x32.

Similarly, a prediction unit of the coding unit 620 having the size of 32x32 and the depth of 1 may be split into partitions included in the coding unit 620, i.e. a partition 620 having a size of 32x32, partitions 622 having a size of 32x16, partitions 624 having a size of 16x32, and partitions 626 having a size of 16x16.

Similarly, a prediction unit of the coding unit 630 having the size of 16x16 and the depth of 2 may be split into partitions included in the coding unit 630, i.e. a partition having a size of 16x16 included in the coding unit 630, partitions 632 having a size of 16x8, partitions 634 having a size of 8x16, and partitions 636 having a size of 8x8.

Similarly, a prediction unit of the coding unit 640 having the size of 8x8 and the depth of 3 may be split into partitions included in the coding unit 640, i.e. a partition having a size of 8x8 included in the coding unit 640, partitions 642 having a size of 8x4, partitions 644 having a size of 4x8, and partitions 646 having a size of 4x4.

In order to determine the at least one coded depth of the coding units constituting the maximum coding unit 610, the coding unit determiner 120 of the video encoding apparatus 100 performs encoding for coding units corresponding to each depth included in the maximum coding unit 610.

A number of deeper coding units according to depths including data in the same range and the same size increases as the depth deepens. For example, four coding units corresponding to a depth of 2 are required to cover data that is included in one coding unit corresponding to a depth of 1. Accordingly, in order to compare encoding results of the same data according to depths, the coding unit corresponding to the depth of 1 and four coding units corresponding to the depth of 2 are each encoded.

In order to perform encoding for a current depth from among the depths, a least encoding error may be selected for the current depth by performing encoding for each prediction unit in the coding units corresponding to the current depth, along the horizontal axis of the hierarchical structure 600. Alternatively, the minimum encoding error may be searched for by comparing the least encoding errors according to depths, by performing encoding for each depth as the depth deepens along the vertical axis of the hierarchical structure 600. A depth and a partition having the minimum encoding error in the coding unit 610 may be selected as the coded depth and a partition type of the coding unit 610.

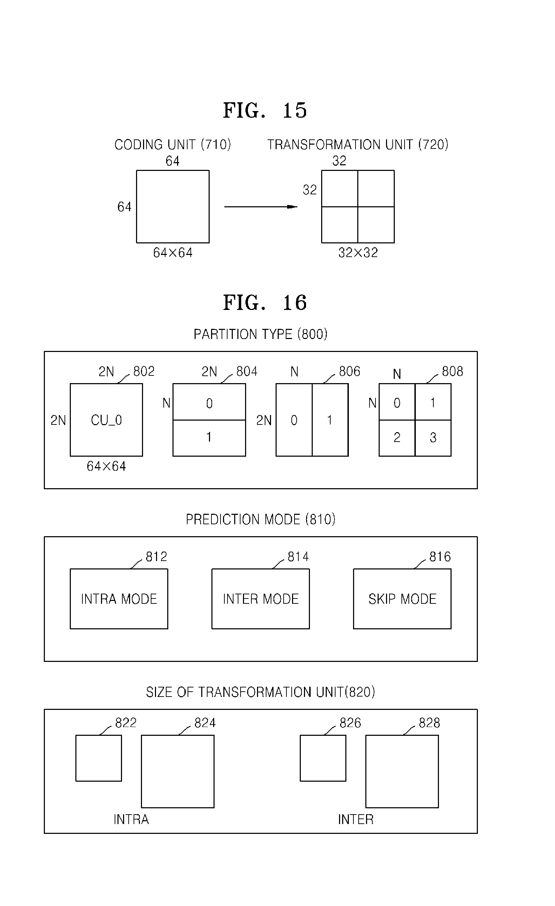

FIG. 15 is a diagram for describing a relationship between a coding unit 710 and transformation units 720, according to an embodiment of the present invention.

The video encoding or decoding apparatus 100 or 200 encodes or decodes an image according to coding units having sizes smaller than or equal to a maximum coding unit for each maximum coding unit. Sizes of transformation units for transformation during encoding may be selected based on data units that are not larger than a corresponding coding unit.

For example, in the video encoding or decoding apparatus 100 or 200, if a size of the coding unit 710 is 64x64, transformation may be performed by using the transformation units 720 having a size of 32x32.

Also, data of the coding unit 710 having the size of 64x64 may be encoded by performing the transformation on each of the transformation units having the size of 32x32, 16x16, 8x8, and 4x4, which are smaller than 64x64, and then a transformation unit having the least coding error may be selected.

FIG. 16 is a diagram for describing encoding information of coding units corresponding to a coded depth, according to an embodiment of the present invention.

The output unit 130 of the video encoding apparatus 100 may encode and transmit information 800 about a partition type, information 810 about a prediction mode, and information 820 about a size of a transformation unit for each coding unit corresponding to a coded depth, as information about an encoding mode.

The information 800 indicates information about a shape of a partition obtained by splitting a prediction unit of a current coding unit, wherein the partition is a data unit for prediction encoding the current coding unit. For example, a current coding unit CU_0 having a size of 2Nx2N may be split into any one of a partition 802 having a size of 2Nx2N, a partition 804 having a size of 2NxN, a partition 806 having a size of Nx2N, and a partition 808 having a size of NxN. Here, the information 800 about a partition type is set to indicate one of the partition 804 having a size of 2NxN, the partition 806 having a size of Nx2N, and the partition 808 having a size of NxN

The information 810 indicates a prediction mode of each partition. For example, the information 810 may indicate a mode of prediction encoding performed on a partition indicated by the information 800, i.e., an intra mode 812, an inter mode 814, or a skip mode 816.

The information 820 indicates a transformation unit to be based on when transformation is performed on a current coding unit. For example, the transformation unit may be a first intra transformation unit 822, a second intra transformation unit 824, a first inter transformation unit 826, or a second inter transformation unit 828.

The image data and encoding information extractor 220 of the video decoding apparatus 200 may extract and use the information 800, 810, and 820 for decoding, according to each deeper coding unit.

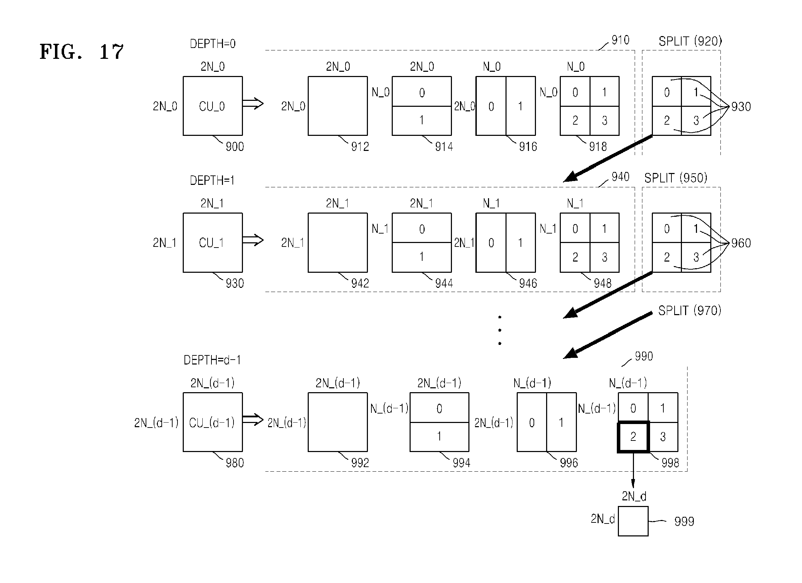

FIG. 17 is a diagram of deeper coding units according to depths, according to an embodiment of the present invention.

Split information may be used to indicate a change of a depth. The spilt information indicates whether a coding unit of a current depth is split into coding units of a lower depth.

A prediction unit 910 for prediction encoding a coding unit 900 having a depth of 0 and a size of 2N_0x2N_0 may include partitions of a partition type 912 having a size of 2N_0x2N_0, a partition type 914 having a size of 2N_0xN_0, a partition type 916 having a size of N_0x2N_0, and a partition type 918 having a size of N_0xN_0. FIG. 17 only illustrates the partition types 912 through 918 which are obtained by symmetrically splitting the prediction unit 910, but a partition type is not limited thereto, and the partitions of the prediction unit 910 may include asymmetrical partitions, partitions having a predetermined shape, and partitions having a geometrical shape.

Prediction encoding is repeatedly performed on one partition having a size of 2N_0x2N_0, two partitions having a size of 2N_0xN_0, two partitions having a size of N_0x2N_0, and four partitions having a size of N_0xN_0, according to each partition type. The prediction encoding in an intra mode and an inter mode may be performed on the partitions having the sizes of 2N_0x2N_0, N_0x2N_0, 2N_0xN_0, and N_0xN_0. The prediction encoding in a skip mode is performed only on the partition having the size of 2N_0x2N_0.

Errors of encoding including the prediction encoding in the partition types 912 through 918 are compared, and the least encoding error is determined among the partition types. If an encoding error is smallest in one of the partition types 912 through 916, the prediction unit 910 may not be split into a lower depth.

If the encoding error is the smallest in the partition type 918, a depth is changed from 0 to 1 to split the partition type 918 in operation 920, and encoding is repeatedly performed on coding units 930 having a depth of 2 and a size of N_0xN_0 to search for a minimum encoding error.

A prediction unit 940 for prediction encoding the coding unit 930 having a depth of 1 and a size of 2N_1 x2N_1 (=N_0xN_0) may include partitions of a partition type 942 having a size of 2N_1x2N_1, a partition type 944 having a size of 2N_1 xN_1, a partition type 946 having a size of N_1x2N_1, and a partition type 948 having a size of N_1xN_1.

If an encoding error is the smallest in the partition type 948, a depth is changed from 1 to 2 to split the partition type 948 in operation 950, and encoding is repeatedly performed on coding units 960, which have a depth of 2 and a size of N_2xN_2 to search for a minimum encoding error.

When a maximum depth is d, split operation according to each depth may be performed up to when a depth becomes d-1, and split information may be encoded as up to when a depth is one of 0 to d-2. In other words, when encoding is performed up to when the depth is d-1 after a coding unit corresponding to a depth of d-2 is split in operation 970, a prediction unit 990 for prediction encoding a coding unit 980 having a depth of d-1 and a size of 2N_(d-1)x2N_(d-1) may include partitions of a partition type 992 having a size of 2N_(d-1)x2N_(d-1), a partition type 994 having a size of 2N_(d-1)xN_(d-1), a partition type 996 having a size of N_(d-1)x2N_(d-1), and a partition type 998 having a size of N_(d-1)xN_(d-1).

Prediction encoding may be repeatedly performed on one partition having a size of 2N_(d-1)x2N_(d-1), two partitions having a size of 2N_(d-1)xN_(d-1), two partitions having a size of N_(d-1)x2N_(d-1), four partitions having a size of N_(d-1)xN_(d-1) from among the partition types 992 through 998 to search for a partition type having a minimum encoding error.

Even when the partition type 998 has the minimum encoding error, since a maximum depth is d, a coding unit CU_(d-1) having a depth of d-1 is no longer split to a lower depth, and a coded depth for the coding units constituting a current maximum coding unit 900 is determined to be d-1 and a partition type of the current maximum coding unit 900 may be determined to be N_(d-1)xN_(d-1). Also, since the maximum depth is d and a minimum coding unit 980 having a lowermost depth of d-1 is no longer split to a lower depth, split information for the minimum coding unit 980 is not set.

A data unit 999 may be a 'minimum unit' for the current maximum coding unit. A minimum unit according to an embodiment of the present invention may be a rectangular data unit obtained by splitting a minimum coding unit 980 by 4. By performing the encoding repeatedly, the video encoding apparatus 100 may select a depth having the least encoding error by comparing encoding errors according to depths of the coding unit 900 to determine a coded depth, and set a corresponding partition type and a prediction mode as an encoding mode of the coded depth.

As such, the minimum encoding errors according to depths are compared in all of the depths of 1 through d, and a depth having the least encoding error may be determined as a coded depth. The coded depth, the partition type of the prediction unit, and the prediction mode may be encoded and transmitted as information about an encoding mode. Also, since a coding unit is split from a depth of 0 to a coded depth, only split information of the coded depth is set to 0, and split information of depths excluding the coded depth is set to 1.

The image data and encoding information extractor 220 of the video decoding apparatus 200 may extract and use the information about the coded depth and the prediction unit of the coding unit 900 to decode the partition 912. The video decoding apparatus 200 may determine a depth, in which split information is 0, as a coded depth by using split information according to depths, and use information about an encoding mode of the corresponding depth for decoding.

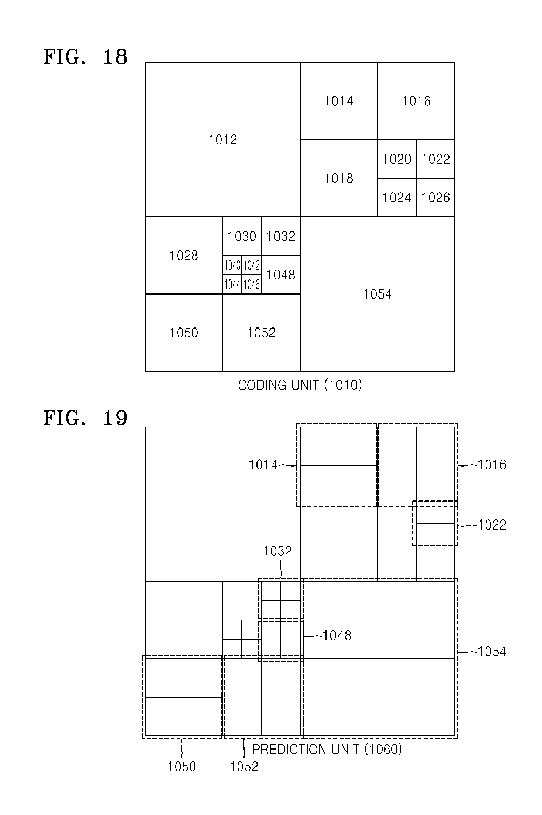

FIGS. 18 through 20 are diagrams for describing a relationship between coding units 1010, prediction units 1060, and transformation units 1070, according to an embodiment of the present invention.

The coding units 1010 are coding units having a tree structure, corresponding to coded depths determined by the video encoding apparatus 100, in a maximum coding unit. The prediction units 1060 are partitions of prediction units of each of the coding units 1010, and the transformation units 1070 are transformation units of each of the coding units 1010.

When a depth of a maximum coding unit is 0 in the coding units 1010, depths of coding units 1012 and 1054 are 1, depths of coding units 1014, 1016, 1018, 1028, 1050, and 1052 are 2, depths of coding units 1020, 1022, 1024, 1026, 1030, 1032, and 1048 are 3, and depths of coding units 1040, 1042, 1044, and 1046 are 4.

In the prediction units 1060, some encoding units 1014, 1016, 1022, 1032, 1048, 1050, 1052, and 1054 are obtained by splitting the coding units in the encoding units 1010. In other words, partition types in the coding units 1014, 1022, 1050, and 1054 have a size of 2NxN, partition types in the coding units 1016, 1048, and 1052 have a size of Nx2N, and a partition type of the coding unit 1032 has a size of NxN. Prediction units and partitions of the coding units 1010 are smaller than or equal to each coding unit.

Transformation or inverse transformation is performed on image data of the coding unit 1052 in the transformation units 1070 in a data unit that is smaller than the coding unit 1052. Also, the coding units 1014, 1016, 1022, 1032, 1048, 1050, and 1052 in the transformation units 1070 are different from those in the prediction units 1060 in terms of sizes and shapes. In other words, the video encoding and decoding apparatuses 100 and 200 may perform intra prediction, motion estimation, motion compensation, transformation, and inverse transformation individually on a data unit in the same coding unit.

Accordingly, encoding is recursively performed on each of coding units having a hierarchical structure in each region of a maximum coding unit to determine an optimum coding unit, and thus coding units having a recursive tree structure may be obtained. Encoding information may include split information about a coding unit, information about a partition type, information about a prediction mode, and information about a size of a transformation unit. Table 1 shows the encoding information that may be set by the video encoding and decoding apparatuses 100 and 200.

Table 1

| Split Information 0 (Encoding on Coding Unit having Size of 2Nx2N and Current Depth of d) | | | | | Split Information 1 |
|---|---|---|---|---|---|
| Prediction Mode | Partition Type | | Size of Transformation Unit | | Repeatedly Encode Coding Units having Lower Depth of d+1 |
| Intra Inter Skip (Only 2Nx2N) | Symmetrical Partition Type | Asymmetrical Partition Type | Split Information 0 of Transformation Unit | Split Information 1 of Transformation Unit | |
| | 2Nx2N 2NxN Nx2N NxN | 2NxnU 2NxnD nLx2N nRx2N | 2Nx2N | NxN (Symmetrical Type) N/2xN/2 (Asymmetrical Type) | |

The output unit 130 of the video encoding apparatus 100 may output the encoding information about the coding units having a tree structure, and the image data and encoding information extractor 220 of the video decoding apparatus 200 may extract the encoding information about the coding units having a tree structure from a received bitstream.

Split information indicates whether a current coding unit is split into coding units of a lower depth. If split information of a current depth d is 0, a depth, in which a current coding unit is no longer split into a lower depth, is a coded depth, and thus information about a partition type, prediction mode, and a size of a transformation unit may be defined for the coded depth. If the current coding unit is further split according to the split information, encoding is independently performed on four split coding units of a lower depth.

A prediction mode may be one of an intra mode, an inter mode, and a skip mode. The intra mode and the inter mode may be defined in all partition types, and the skip mode is defined only in a partition type having a size of 2Nx2N.

The information about the partition type may indicate symmetrical partition types having sizes of 2Nx2N, 2NxN, Nx2N, and NxN, which are obtained by symmetrically splitting a height or a width of a prediction unit, and asymmetrical partition types having sizes of 2NxnU, 2NxnD, nLx2N, and nRx2N, which are obtained by asymmetrically splitting the height or width of the prediction unit. The asymmetrical partition types having the sizes of 2NxnU and 2NxnD may be respectively obtained by splitting the height of the prediction unit in 1:3 and 3:1, and the asymmetrical partition types having the sizes of nLx2N and nRx2N may be respectively obtained by splitting the width of the prediction unit in 1:3 and 3:1

The size of the transformation unit may be set to be two types in the intra mode and two types in the inter mode. In other words, if split information of the transformation unit is 0, the size of the transformation unit may be 2Nx2N, which is the size of the current coding unit. If split information of the transformation unit is 1, the transformation units may be obtained by splitting the current coding unit. Also, if a partition type of the current coding unit having the size of 2Nx2N is a symmetrical partition type, a size of a transformation unit may be NxN, and if the partition type of the current coding unit is an asymmetrical partition type, the size of the transformation unit may be N/2xN/2.

The encoding information about coding units having a tree structure may include at least one of a coding unit corresponding to a coded depth, a prediction unit, and a minimum unit. The coding unit corresponding to the coded depth may include at least one of a prediction unit and a minimum unit containing the same encoding information.

Accordingly, it is determined whether adjacent data units are included in the same coding unit corresponding to the coded depth by comparing encoding information of the adjacent data units. Also, a corresponding coding unit corresponding to a coded depth is determined by using encoding information of a data unit, and thus a distribution of coded depths in a maximum coding unit may be determined.

Accordingly, if a current coding unit is predicted based on encoding information of adjacent data units, encoding information of data units in deeper coding units adjacent to the current coding unit may be directly referred to and used.

Alternatively, if a current coding unit is predicted based on encoding information of adjacent data units, data units adjacent to the current coding unit are searched using encoded information of the data units, and the searched adjacent coding units may be referred to for predicting the current coding unit.

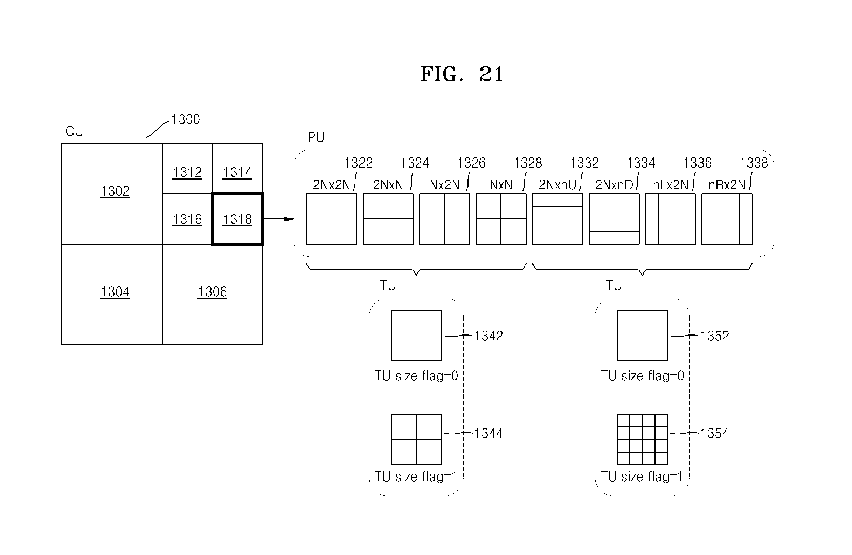

FIG. 21 is a diagram for describing a relationship between a coding unit, a prediction unit or a partition, and a transformation unit, according to encoding mode information of Table 1.

A maximum coding unit 1300 includes coding units 1302, 1304, 1306, 1312, 1314, 1316, and 1318 of coded depths. Here, since the coding unit 1318 is a coding unit of a coded depth, split information may be set to 0. Information about a partition type of the coding unit 1318 having a size of 2Nx2N may be set to be one of a partition type 1322 having a size of 2Nx2N, a partition type 1324 having a size of 2NxN, a partition type 1326 having a size of Nx2N, a partition type 1328 having a size of NxN, a partition type 1332 having a size of 2NxnU, a partition type 1334 having a size of 2NxnD, a partition type 1336 having a size of nLx2N, and a partition type 1338 having a size of nRx2N.

Split information (TU (Transformation Unit)size flag) of a transformation unit is a type of a transformation index. The size of the transformation unit corresponding to the transformation index may be changed according to a prediction unit type or partition type of the coding unit.

For example, when the partition type is set to be symmetrical, i.e. the partition type 1322, 1324, 1326, or 1328, a transformation unit 1342 having a size of 2Nx2N is set if split information (TU size flag) of a transformation unit is 0, and a transformation unit 1344 having a size of NxN is set if a TU size flag is 1.

When the partition type is set to be asymmetrical, i.e., the partition type 1332, 1334, 1336, or 1338, a transformation unit 1352 having a size of 2Nx2N is set if a TU size flag is 0, and a transformation unit 1354 having a size of N/2xN/2 is set if a TU size flag is 1.

Referring to FIG. 21, the TU size flag is a flag having a value of 0 or 1, but the TU size flag is not limited to 1 bit, and a transformation unit may be hierarchically split having a tree structure while the TU size flag increases from 0. Split information (TU size flag) of a transformation unit may be an example of a transformation index.

In this case, the size of a transformation unit that has been actually used may be expressed by using a TU size flag of a transformation unit, according to an embodiment of the present invention, together with a maximum size and minimum size of the transformation unit. According to an embodiment of the present invention, the video encoding apparatus 100 is capable of encoding maximum transformation unit size information, minimum transformation unit size information, and a maximum TU size flag. The result of encoding the maximum transformation unit size information, the minimum transformation unit size information, and the maximum TU size flag may be inserted into an SPS. According to an embodiment of the present invention, the video decoding apparatus 200 may decode video by using the maximum transformation unit size information, the minimum transformation unit size information, and the maximum TU size flag.

For example, (a) if the size of a current coding unit is 64x64 and a maximum transformation unit size is 32x32, (a-1) then the size of a transformation unit may be 32x32 when a TU size flag is 0, (a-2) may be 16x16 when the TU size flag is 1, and (a-3) may be 8x8 when the TU size flag is 2.

As another example, (b) if the size of the current coding unit is 32x32 and a minimum transformation unit size is 32x32, (b-1) then the size of the transformation unit may be 32x32 when the TU size flag is 0. Here, the TU size flag cannot be set to a value other than 0, since the size of the transformation unit cannot be less than 32x32.

As another example, (c) if the size of the current coding unit is 64x64 and a maximum TU size flag is 1, then the TU size flag may be 0 or 1. Here, the TU size flag cannot be set to a value other than 0 or 1.

Thus, if it is defined that the maximum TU size flag is 'MaxTransformSizeIndex', a minimum transformation unit size is 'MinTransformSize', and a transformation unit size is 'RootTuSize' when the TU size flag is 0, then a current minimum transformation unit size 'CurrMinTuSize' that can be determined in a current coding unit, may be defined by Equation (1):

$$\text{CurrMinTuSize}$$
$$= \max(\text{MinTransformSize}, \text{RootTuSize}/(2^{\text{MaxTransformSizeIndex}})) \; ... \; (1)$$

Compared to the current minimum transformation unit size 'CurrMinTuSize' that can be determined in the current coding unit, a transformation unit size 'RootTuSize' when the TU size flag is 0 may denote a maximum transformation unit size that can be selected in the system. In Equation (1), 'RootTuSize/(2^MaxTransformSizeIndex)' denotes a transformation unit size when the transformation unit size 'RootTuSize', when the TU size flag is 0, is split a number of times corresponding to the maximum TU size flag, and 'MinTransformSize' denotes a minimum transformation size. Thus, a smaller value from among 'RootTuSize/(2^MaxTransformSizeIndex)' and 'MinTransformSize' may be the current minimum transformation unit size 'CurrMinTuSize' that can be determined in the current coding unit.

According to an embodiment of the present invention, the maximum transformation unit size RootTuSize may vary according to the type of a prediction mode.

For example, if a current prediction mode is an inter mode, then 'RootTuSize' may be determined by using Equation (2) below. In Equation (2), 'MaxTransformSize' denotes a maximum transformation unit size, and 'PUSize' denotes a current prediction unit size.

$$RootTuSize = min(MaxTransformSize, PUSize) \ ......... \ (2)$$

That is, if the current prediction mode is the inter mode, the transformation unit size 'RootTuSize', when the TU size flag is 0, may be a smaller value from among the maximum transformation unit size and the current prediction unit size.

If a prediction mode of a current partition unit is an intra mode, 'RootTuSize' may be determined by using Equation (3) below. In Equation (3), 'PartitionSize' denotes the size of the current partition unit.

$$RootTuSize = min(MaxTransformSize, PartitionSize) \ ...........(3)$$

That is, if the current prediction mode is the intra mode, the transformation unit size 'RootTuSize' when the TU size flag is 0 may be a smaller value from among the maximum transformation unit size and the size of the current partition unit.

However, the current maximum transformation unit size 'RootTuSize' that varies according to the type of a prediction mode in a partition unit is just an example and the present invention is not limited thereto.

According to the video encoding method based on coding units having a tree structure as described with reference to FIGS. 7 through 19, image data of a spatial region is encoded for each coding unit of a tree structure. According to the video decoding method based on coding units having a tree structure, decoding is performed for each maximum coding unit to restore image data of a spatial region. Thus, a picture and a video that is a picture sequence may be restored. The restored video may be reproduced by a reproducing apparatus, stored in a storage medium, or transmitted through a network.

The embodiments of the present invention may be written as computer programs and may be implemented in general-use digital computers that execute the programs using a computer readable recording medium. Examples of the computer readable recording medium include magnetic storage media (e.g., ROM, floppy disks, hard disks, etc.) and optical recording media (e.g., CD-ROMs, or DVDs).

For convenience of description, the video encoding method according to the inverse transformation method that has been described with reference to FIGS. 1 through 21, will be collectively referred to as a 'video encoding method according to the present invention'. In addition, the video decoding method according to the inverse transformation method that has been described with reference to FIGS. 1 through 21, will be referred to as a 'video decoding method according to the present invention'.

A video encoding apparatus including the inverse transformation apparatus 10, the video encoding apparatus 70, the video decoding apparatus 50, and the video encoding apparatus 100, which has been described with reference to FIGS. 1 through 21, will be referred to as a 'video encoding apparatus according to the present invention'. In addition, a video decoding apparatus including the inverse transformation apparatus 10, the video decoding apparatus 50, the video decoding apparatus 20, or the image decoder 500, which has been descried with reference to FIGS. 1 through 21, will be referred to as a 'video decoding apparatus according to the present invention'.

A computer readable recording medium storing a program, e.g., a disc 26000, according to an embodiment of the present invention will now be described in detail.

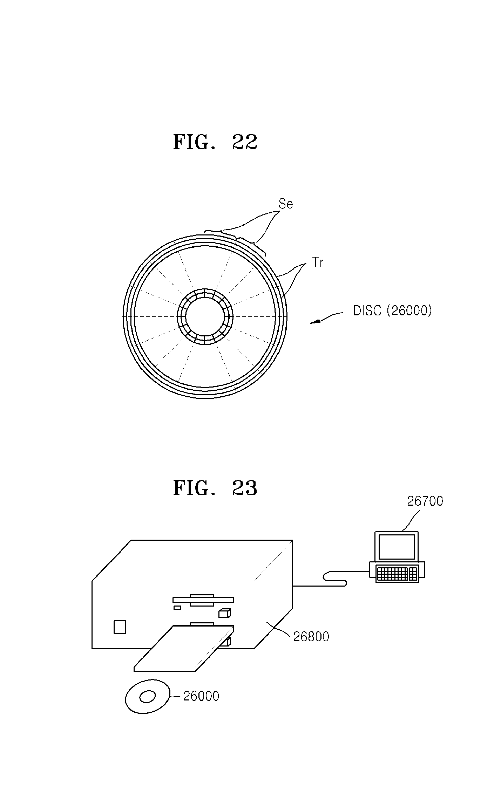

FIG. 22 illustrates a physical structure of a disc 26000 that stores a program, according to an embodiment. The disc 26000 which is a storage medium may be a hard drive, a compact disc-read only memory (CD-ROM) disc, a Blu-ray disc, or a digital versatile disc (DVD). The disc 26000 includes a plurality of concentric tracks Tr each being divided into a specific number of sectors Se in a circumferential direction of the disc 26000. In a specific region of the disc 26000, a program that executes the inverse transformation method, the video encoding method, and the video decoding method as described above may be assigned and stored.

A computer system embodied using a storage medium that stores a program for executing a video encoding method and a video decoding method as described above will now be described with reference to FIG. 23.

FIG. 23 illustrates a disc drive 26800 that records and reads a program by using a disc 26000. A computer system 26700 may store a program that executes at least one of a video encoding method and a video decoding method according to an embodiment of the present invention, in a disc 26000 via the disc drive 26800. To run the program stored in the disc 26000 in the computer system 26700, the program may be read from the disc 26000 and be transmitted to the computer system 26700 by using the disc drive 26800.

The program that executes at least one of a video encoding method and a video decoding method according to an embodiment of the present invention may be stored not only in the disc 26000 illustrated in FIG. 22 or 23 but also in a memory card, a ROM cassette, or a solid state drive (SSD).

A system to which the video encoding method and a video decoding method described above are applied will be described below.

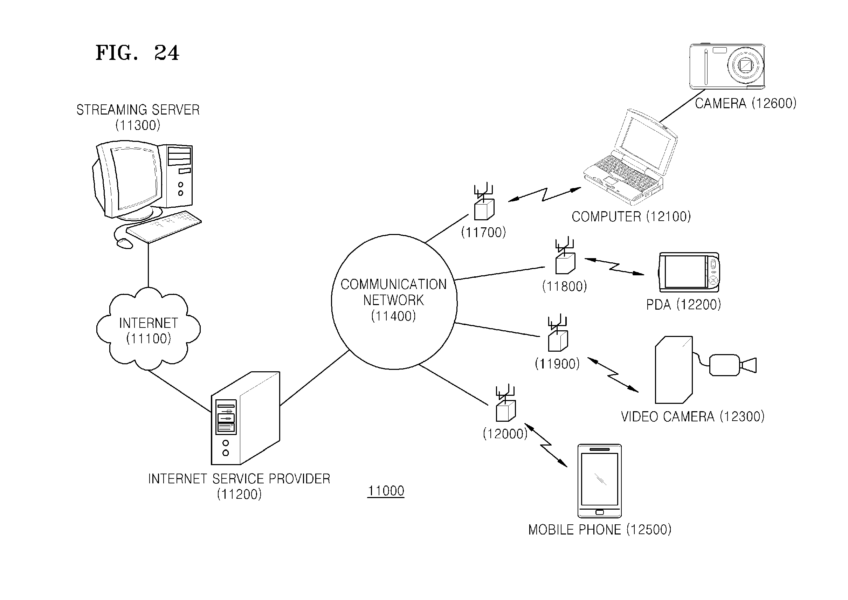

FIG. 24 illustrates an entire structure of a content supply system 11000 that provides content distribution service. A service area of a communication system is divided into predetermined-sized cells, and wireless base stations 11700, 11800, 11900, and 12000 are installed in these cells, respectively.

The content supply system 11000 includes a plurality of independent devices. For example, the plurality of independent devices, such as a computer 12100, a personal digital assistant (PDA) 12200, a video camera 12300, and a mobile phone 12500, are connected to the Internet 11100 via an internet service provider 11200, a communication network 11400, and the wireless base stations 11700, 11800, 11900, and 12000.

However, the content supply system 11000 is not limited to as illustrated in FIG. 24, and devices may be selectively connected thereto. The plurality of independent devices may be directly connected to the communication network 11400, not via the wireless base stations 11700, 11800, 11900, and 12000.

The video camera 12300 is an imaging device, e.g., a digital video camera, which is capable of capturing video images. The mobile phone 12500 may employ at least one communication method from among various protocols, e.g., Personal Digital Communications (PDC), Code Division Multiple Access (CDMA), Wideband-Code Division Multiple Access (W-CDMA), Global System for Mobile Communications (GSM), and Personal Handyphone System (PHS).

The video camera 12300 may be connected to a streaming server 11300 via the wireless base station 11900 and the communication network 11400. The streaming server 11300 allows content received from a user via the video camera 12300 to be streamed via a real-time broadcast. The content received from the video camera 12300 may be encoded using the video camera 12300 or the streaming server 11300. Video data captured by the video camera 12300 may be transmitted to the streaming server 11300 via the computer 12100.

Video data captured by a camera 12600 may also be transmitted to the streaming server 11300 via the computer 12100. The camera 12600 is an imaging device capable of capturing both still images and video images, similar to a digital camera. The video data captured by the camera 12600 may be encoded using the camera 12600 or the computer 12100. Software that performs encoding and decoding video may be stored in a computer readable recording medium, e.g., a CD-ROM disc, a floppy disc, a hard disc drive, an SSD, or a memory card, which may be accessible by the computer 12100.

If video data is captured by a camera built in the mobile phone 12500, the video data may be received from the mobile phone 12500.

The video data may also be encoded by a large scale integrated circuit (LSI) system installed in the video camera 12300, the mobile phone 12500, or the camera 12600.

According to an embodiment, the content supply system 11000 may encode content data recorded by a user using the video camera 12300, the camera 12600, the mobile phone 12500, or another imaging device, e.g., content recorded during a concert, and transmit the encoded content data to the streaming server 11300. The streaming server 11300 may transmit the encoded content data in a type of a streaming content to other clients that request the content data.

The clients are devices capable of decoding the encoded content data, e.g., the computer 12100, the PDA 12200, the video camera 12300, or the mobile phone 12500. Thus, the content supply system 11000 allows the clients to receive and reproduce the encoded content data. Also, the content supply system 11000 allows the clients to receive the encoded content data and decode and reproduce the encoded content data in real time, thereby enabling personal broadcasting.

Encoding and decoding operations of the plurality of independent devices included in the content supply system 11000 may be similar to those of a video encoding apparatus and a video decoding apparatus according to an embodiment of the present invention.

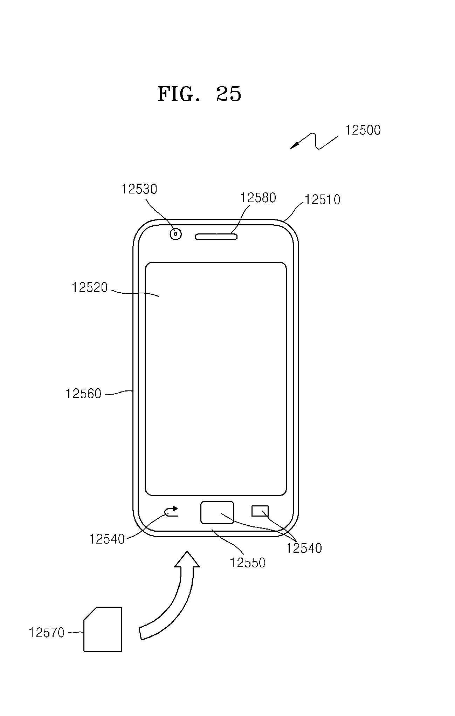

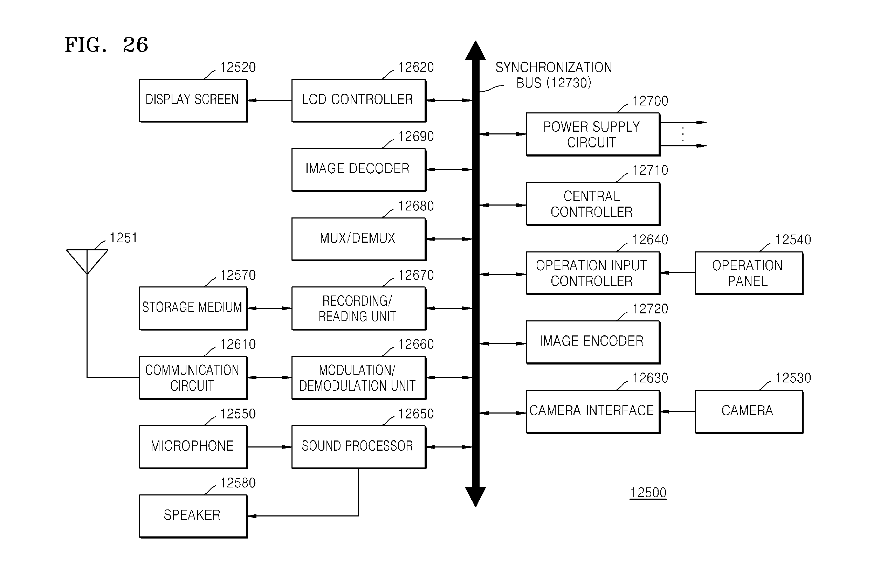

The mobile phone 12500 included in the content supply system 11000 according to an embodiment of the present invention will now be described in greater detail with referring to FIGS. 25 and 26.

FIG. 25 illustrates an external structure of a mobile phone 12500 to which a video encoding method and a video decoding method are applied, according to an embodiment of the present invention. The mobile phone 12500 may be a smart phone, the functions of which are not limited and a large part of the functions of which may be changed or expanded.

The mobile phone 12500 includes an internal antenna 12510 via which a radio-frequency (RF) signal may be exchanged with the wireless base station 12000 of FIG. 25, and includes a display screen 12520 for displaying images captured by a camera 12530 or images that are received via the antenna 12510 and decoded, e.g., a liquid crystal display (LCD) or an organic light-emitting diodes (OLED) screen. The smart phone 12500 includes an operation panel 12540 including a control button and a touch panel. If the display screen 12520 is a touch screen, the operation panel 12540 further includes a touch sensing panel of the display screen 12520. The smart phone 12500 includes a speaker 12580 for outputting voice and sound or another type sound output unit, and a microphone 12550 for inputting voice and sound or another type sound input unit. The smart phone 12500 further includes the camera 12530, such as a charge-coupled device (CCD) camera, to capture video and still images. The smart phone 12500 may further include a storage medium 12570 for storing encoded/decoded data, e.g., video or still images captured by the camera 12530, received via email, or obtained according to various ways; and a slot 12560 via which the storage medium 12570 is loaded into the mobile phone 12500. The storage medium 12570 may be a flash memory, e.g., a secure digital (SD) card or an electrically erasable and programmable read only memory (EEPROM) included in a plastic case.

FIG. 26 illustrates an internal structure of the mobile phone 12500. To systemically control parts of the mobile phone 12500 including the display screen 12520 and the operation panel 12540, a power supply circuit 12700, an operation input controller 12640, an image encoding unit 12720, a camera interface 12630, an LCD controller 12620, an image decoding unit 12690, a multiplexer/demultiplexer 12680, a recording/reading unit 12670, a modulation/demodulation unit 12660, and a sound processor 12650 are connected to a central controller 12710 via a synchronization bus 12730.

If a user operates a power button and sets from a 'power off' state to a power on' state, the power supply circuit 12700 supplies power to all the parts of the mobile phone 12500 from a battery pack, thereby setting the mobile phone 12500 in an operation mode.

The central controller 12710 includes a central processing unit (CPU), a ROM, and a random access memory (RAM).

While the mobile phone 12500 transmits communication data to the outside, a digital signal is generated in the mobile phone 12500 under control of the central controller. For example, the sound processor 12650 may generate a digital sound signal, the image encoding unit 12720 may generate a digital image signal, and text data of a message may be generated via the operation panel 12540 and the operation input controller 12640. When a digital signal is delivered to the modulation/demodulation unit 12660 under control of the central controller 12710, the modulation/demodulation unit 12660 modulates a frequency band of the digital signal, and a communication circuit 12610 performs digital-to-analog conversion (DAC) and frequency conversion on the frequency band-modulated digital sound signal. A transmission signal output from the communication circuit 12610 may be transmitted to a voice communication base station or the wireless base station 12000 via the antenna 12510.

For example, when the mobile phone 12500 is in a conversation mode, a sound signal obtained via the microphone 12550 is transformed into a digital sound signal by the sound processor 12650, under control of the central controller 12710. The digital sound signal may be transformed into a transformation signal via the modulation/demodulation unit 12660 and the communication circuit 12610, and may be transmitted via the antenna 12510.

When a text message, e.g., email, is transmitted in a data communication mode, text data of the text message is input via the operation panel 12540 and is transmitted to the central controller 12710 via the operation input controller 12640. Under control of the central controller 12710, the text data is transformed into a transmission signal via the modulation/demodulation unit 12660 and the communication circuit 12610 and is transmitted to the wireless base station 12000 via the antenna 12510.

To transmit image data in the data communication mode, image data captured by the camera 12530 is provided to the image encoding unit 12720 via the camera interface 12630. The captured image data may be directly displayed on the display screen 12520 via the camera interface 12630 and the LCD controller 12620.

A structure of the image encoding unit 12720 may correspond to that of the video encoding apparatus 100 described above. The image encoding unit 12720 may transform the image data received from the camera 12530 into compressed and encoded image data according to a video encoding method employed by the video encoding apparatus 100 or the image encoder 400 described above, and then output the encoded image data to the multiplexer/demultiplexer 12680. During a recording operation of the camera 12530, a sound signal obtained by the microphone 12550 of the mobile phone 12500 may be transformed into digital sound data via the sound processor 12650, and the digital sound data may be delivered to the multiplexer/demultiplexer 12680.

The multiplexer/demultiplexer 12680 multiplexes the encoded image data received from the image encoding unit 12720, together with the sound data received from the sound processor 12650. A result of multiplexing the data may be transformed into a transmission signal via the modulation/demodulation unit 12660 and the communication circuit 12610, and may then be transmitted via the antenna 12510.

While the mobile phone 12500 receives communication data from the outside, frequency recovery and ADC are performed on a signal received via the antenna 12510 to transform the signal into a digital signal. The modulation/demodulation unit 12660 modulates a frequency band of the digital signal. The frequency-band modulated digital signal is transmitted to the video decoding unit 12690, the sound processor 12650, or the LCD controller 12620, according to the type of the digital signal.

In the conversation mode, the mobile phone 12500 amplifies a signal received via the antenna 12510, and obtains a digital sound signal by performing frequency conversion and ADC on the amplified signal. A received digital sound signal is transformed into an analog sound signal via the modulation/demodulation unit 12660 and the sound processor 12650, and the analog sound signal is output via the speaker 12580, under control of the central controller 12710.

When in the data communication mode, data of a video file accessed at an Internet website is received, a signal received from wireless base station 12000 via the antenna 12510 is output as multiplexed data via the modulation/demodulation unit 12660, and the multiplexed data is transmitted to the multiplexer/demultiplexer 12680.

To decode the multiplexed data received via the antenna 12510, the multiplexer/demultiplexer 12680 demultiplexes the multiplexed data into an encoded video data stream and an encoded audio data stream. Via the synchronization bus 12730, the encoded video data stream and the encoded audio data stream are provided to the video decoding unit 12690 and the sound processor 12650, respectively.

A structure of the image decoding unit 12690 may correspond to that of the video decoding apparatus 200 described above. The image decoding unit 12690 may decode the encoded video data to obtain restored video data and provide the restored video data to the display screen 12520 via the LCD controller 12620, according to a video decoding method employed by the video decoding apparatus 200 or the image decoder 500 described above.

Thus, the data of the video file accessed at the Internet website may be displayed on the display screen 12520. At the same time, the sound processor 12650 may transform audio data into an analog sound signal, and provide the analog sound signal to the speaker 12580. Thus, audio data contained in the video file accessed at the Internet website may also be reproduced via the speaker 12580.

The mobile phone 12500 or another type of communication terminal may be a transceiving terminal including both a video encoding apparatus and a video decoding apparatus according to an embodiment of the present invention, may be a transceiving terminal including only the video encoding apparatus, or may be a transceiving terminal including only the video decoding apparatus.

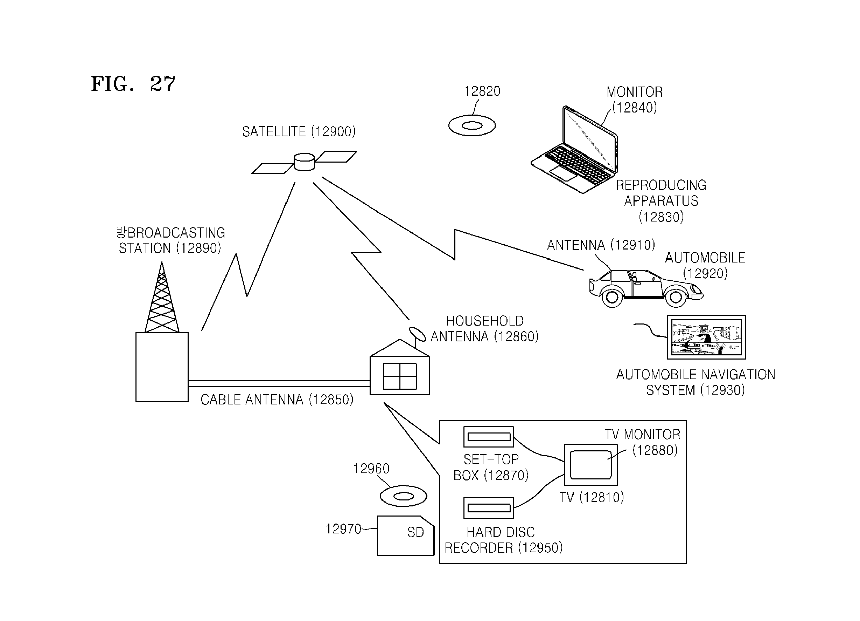

A communication system according to the present invention is not limited to the communication system described above with reference to FIG. 25. For example, FIG. 27 illustrates a digital broadcasting system employing a communication system, according to an embodiment of the present invention. The digital broadcasting system of FIG. 27 may receive a digital broadcast transmitted via a satellite or a terrestrial network by using a video encoding apparatus and a video decoding apparatus according to an embodiment of the present invention.

Specifically, a broadcasting station 12890 transmits a video data stream to a communication satellite or a broadcasting satellite 12900 by using radio waves. The broadcasting satellite 12900 transmits a broadcast signal, and the broadcast signal is transmitted to a satellite broadcast receiver via a household antenna 12860. In every house, an encoded video stream may be decoded and reproduced by a TV receiver 12810, a set-top box 12870, or another device.

When a video decoding apparatus according to an embodiment of the present invention is implemented in a reproducing apparatus 12830, the reproducing apparatus 12830 may parse and decode an encoded video stream recorded on a storage medium 12820, such as a disc or a memory card to restore digital signals. Thus, the restored video signal may be reproduced, for example, on a monitor 12840.

In the set-top box 12870 connected to the antenna 12860 for a satellite/terrestrial broadcast or a cable antenna 12850 for receiving a cable television (TV) broadcast, a video decoding apparatus according to an embodiment of the present invention may be installed. Data output from the set-top box 12870 may also be reproduced on a TV monitor 12880.

As another example, a video decoding apparatus according to an embodiment of the present invention may be installed in the TV receiver 12810 instead of the set-top box 12870.

An automobile 12920 including an appropriate antenna 12910 may receive a signal transmitted from the satellite 12900 or the wireless base station 11700 of FIG. 24. A decoded video may be reproduced on a display screen of an automobile navigation system 12930 built in the automobile 12920.

A video signal may be encoded by a video encoding apparatus according to an embodiment of the present invention and may then be stored in a storage medium. Specifically, an image signal may be stored in a DVD disc 12960 by a DVD recorder or may be stored in a hard disc by a hard disc recorder 12950. As another example, the video signal may be stored in an SD card 12970. If the hard disc recorder 12950 includes a video decoding apparatus according to an embodiment of the present invention, a video signal recorded on the DVD disc 12960, the SD card 12970, or another storage medium may be reproduced on the TV monitor 12880.

The automobile navigation system 12930 may not include the camera 12530, the camera interface 12630, and the image encoding unit 12720 of FIG. 27. For example, the computer 12100 and the TV receiver 12810 may not be included in the camera 12530, the camera interface 12630, and the image encoding unit 12720 of FIG. 27.

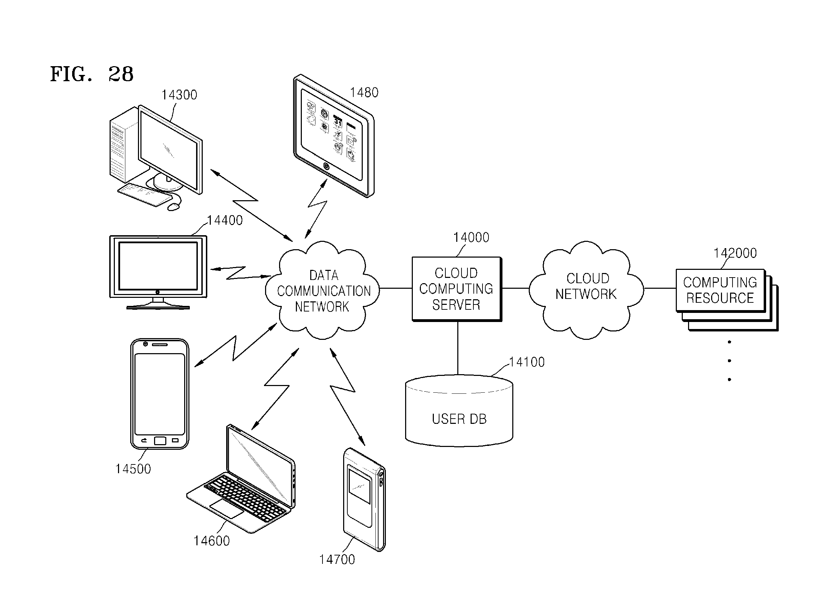

FIG. 28 illustrates a network structure of a cloud computing system using a video encoding apparatus and a video decoding apparatus, according to an embodiment of the present invention.

The cloud computing system may include a cloud computing server 14000, a user database (DB) 14100, a plurality of computing resources 14200, and a user terminal.

The cloud computing system provides an on-demand outsourcing service of the plurality of computing resources 14200 via a data communication network, e.g., the Internet, in response to a request from the user terminal. Under a cloud computing environment, a service provider provides users with desired services by combining computing resources at data centers located at physically different locations by using virtualization technology. A service user does not have to install computing resources, e.g., an application, a storage, an operating system (OS), and security, into his/her own terminal in order to use them, but may select and use desired services from among services in a virtual space generated through the virtualization technology, at a desired point of time.

A user terminal of a specified service user is connected to the cloud computing server 14100 via a data communication network including the Internet and a mobile telecommunication network. User terminals may be provided cloud computing services, and particularly video reproduction services, from the cloud computing server 14100. The user terminals may be various types of electronic devices capable of being connected to the Internet, e.g., a desk-top PC 14300, a smart TV 14400, a smart phone 14500, a notebook computer 14600, a portable multimedia player (PMP) 14700, a tablet PC 14800, and the like.

The cloud computing server 14100 may combine the plurality of computing resources 14200 distributed in a cloud network and provide user terminals with a result of the combining. The plurality of computing resources 14200 may include various data services, and may include data uploaded from user terminals. As described above, the cloud computing server 14100 may provide user terminals with desired services by combining video database distributed in different regions according to the virtualization technology.

User information about users who has subscribed to a cloud computing service is stored in the user DB 14100. The user information may include logging information, addresses, names, and personal credit information of the users. The user information may further include indexes of videos. Here, the indexes may include a list of videos that have already been reproduced, a list of videos that are being reproduced, a pausing point of a video that was being reproduced, and the like.

Information about a video stored in the user DB 14100 may be shared between user devices. For example, when a video service is provided to the notebook computer 14600 in response to a request from the notebook computer 14600, a reproduction history of the video service is stored in the user DB 14100. When a request to reproduce this video service is received from the smart phone 14500, the cloud computing server 14100 searches for and reproduces this video service, based on the user DB 14100. When the smart phone 14500 receives a video data stream from the cloud computing server 14100, a process of reproducing video by decoding the video data stream is similar to an operation of the mobile phone 12500 described above with reference to FIG. 27.

The cloud computing server 14100 may refer to a reproduction history of a desired video service, stored in the user DB 14100. For example, the cloud computing server 14100 receives a request to reproduce a video stored in the user DB 14100, from a user terminal. If this video was being reproduced, then a method of streaming this video, performed by the cloud computing server 14100 may vary according to the request from the user terminal, i.e., according to whether the video will be reproduced, starting from a start thereof or a pausing point thereof. For example, if the user terminal requests to reproduce the video, starting from the start thereof, the cloud computing server 14100 transmits streaming data of the video starting from a first frame thereof to the user terminal. If the user terminal requests to reproduce the video, starting from the pausing point thereof, the cloud computing server 14100 transmits streaming data of the video starting from a frame corresponding to the pausing point, to the user terminal.

In this case, the user terminal may include a video decoding apparatus as described above with reference to FIGS. 1 to 22. As another example, the user terminal may include a video encoding apparatus as described above with reference to FIGS. 1 to 22. Alternatively, the user terminal may include both the video decoding apparatus and the video encoding apparatus as described above with reference to FIGS. 1 to 22.

Various applications of a video encoding method, a video decoding method, a video encoding apparatus, and a video decoding apparatus according to embodiments of the present invention described above with reference to FIGS. 1 to 21 have been described above with reference to FIGS. 22 to 28. However, methods of storing the video encoding method and the video decoding method in a storage medium or methods of implementing the video encoding apparatus and the video decoding apparatus in a device according to various embodiments of the present invention, are not limited to the embodiments described above with reference to FIGS. 22 to 28.

While the present invention has been particularly shown and described with reference to exemplary embodiments thereof, it will be understood by those of ordinary skill in the art that various changes in form and details may be made therein without departing from the spirit and scope according to the present invention as defined by the following claims.

## Claims

1. An inverse transformation method for video decoding, comprising:

   receiving quantized transformation coefficients of a current block;
   generating transformation coefficients by inverse-quantizing the quantized transformation coefficients, and clipping the generated transformation coefficients to a range of a first maximum value and a first minimum value that are determined based on a size of the current block;
   performing first inverse transformation on the clipped transformation coefficients by using a first inverse transformation matrix, and clipping intermediate data generated via the first inverse transformation to a range of a second maximum value and a second minimum value determined based on the size of the current block and an internal bit depth; and
performing second inverse transformation on the clipped intermediate data by using a second inverse transformation matrix.

2.   The inverse transformation method of claim 1, wherein the first inverse transformation matrix is a one-dimensional (1 D) inverse transformation matrix in a vertical frequency direction, and the second inverse transformation matrix is a 1 D inverse transformation matrix in a horizontal frequency direction.

3.   The inverse transformation method of claim 2, wherein the clipping of the intermediate data comprises:

storing the intermediate data generated via the first inverse transformation in a first storage unit; and
storing the clipped intermediate data in a second storage unit,
wherein the first maximum value is determined by using a first storage maximum value indicating a maximum value of data storable in the first storage unit, a second storage maximum value indicating a maximum value of data storable in the second storage unit, and a length of the first inverse transformation matrix,
the second maximum value is determined by using the first storage maximum value, the second storage maximum value, a length of the second inverse transformation matrix, and an internal matrix,
the length of the first inverse transformation matrix is determined based on the size of the current block and the length of the second inverse transformation matrix is determined based on the size of the current block, and
the first minimum value is a minimum negative value corresponding to the first maximum value and the second minimum value is a minimum negative value corresponding to the second maximum value.

4.   The inverse transformation method of claim 3, wherein a smaller value from among a value obtained by dividing a de-scaling bitwise-shifted value of the second storage maximum value by the length of the first inverse transformation matrix, and a value obtained by dividing the first storage maximum value by the length of the first inverse transformation matrix is determined as the first maximum value, and
a smaller value from among a value obtained by dividing a de-scaling bitwise-shifted value of the second storage maximum value considering the internal bit depth by the length of the second inverse transformation matrix, and a value obtained by dividing the first storage maximum value by the length of the second inverse transformation matrix is determined as the second maximum value.

5.   The inverse transformation method of claim 4, wherein the length of the first inverse transformation matrix is an L1-norm value of the first inverse transformation matrix, and
the length of the second inverse transformation matrix is an L1-norm value of the second inverse transformation matrix.

6.   The inverse transformation method of claim 1, further comprising:

performing intra prediction decoding or motion compensation on restored residual data of the current block, which is generated via the second inverse transformation; and
restoring image data of the current block via the intra prediction decoding or motion compensation.

7.   The inverse transformation method of claim 6, wherein the receiving of the quantized transformation coefficients comprises extracting the quantized transformation coefficients of the current block by parsing a received bitstream and performing entropy decoding.

8.   The inverse transformation method of claim 6, wherein the receiving of the quantized transformation coefficients comprises:

performing transformation and quantization on residual data of the current block, which is generated via intra prediction encoding or motion prediction; and
receiving the quantized transformation coefficients generated via the transformation and the quantization.

9.   An inverse transformation apparatus for video decoding, comprising:

an inverse quantizer for generating transformation coefficients by inverse-quantizing quantized transformation coefficients of a current block, and clipping the generated transformation coefficients to a range of a first maximum value and a first minimum value that are determined based on a size of the current block;

a first inverse transformer for performing first inverse transformation on the clipped transformation coefficients by using a first inverse transformation matrix, and clipping first intermediate data generated via the first inverse transformation to a range of a second maximum value and a second minimum value determined based on the size of the current block and an internal bit depth; and

a second inverse transformer for performing second inverse transformation on the clipped first intermediate data by using a second inverse transformation matrix.

10. The inverse transformation apparatus of claim 9, further comprising:

a first storage unit for storing the first intermediate data generated via the first inverse transformation;
a second storage unit for storing the clipped first intermediate data; and
a third storage unit for storing restored residual data of the current block by de-scaling bitwise-shifting second intermediate data generated via the second inverse transformation considering an internal bit depth.

11. The inverse transformation apparatus of claim 9, wherein the first inverse transformation matrix is a one-dimensional (1 D) inverse transformation matrix in a vertical frequency direction, and the second inverse transformation matrix is a 1 D inverse transformation matrix in a horizontal frequency direction.

12. The inverse transformation apparatus of claim 9, wherein the first maximum value is determined by using a first storage maximum value indicating a maximum value of data storable in the first storage unit, a second storage maximum value indicating a maximum value of data storable in the second storage unit, and a length of the first inverse transformation matrix,
the second maximum value is determined by using the first storage maximum value, the second storage maximum value, a length of the second inverse transformation matrix, and an internal matrix,
the length of the first inverse transformation matrix is determined based on the size of the current block and the length of the second inverse transformation matrix is determined based on the size of the current block, and
the first minimum value is a minimum negative value corresponding to the first maximum value and the second minimum value is a minimum negative value corresponding to the second maximum value.

13. The inverse transformation apparatus of claim 9, further comprising a prediction decoder for restoring image data of the current block by performing intra prediction decoding or motion compensation on restored residual data of the current block, which is generated via the second inverse transformation.

14. The inverse transformation apparatus of claim 13, further comprising an encoder for performing transformation and quantization on residual data of the current block, which is generated via intra prediction encoding or motion prediction,
wherein the inverse quantizer performs inverse quantization on quantized transformation coefficients generated by the encoder.

15. A computer-readable recording medium having recorded thereon a program for executing the inverse transformation method of claim 1.

FIG. 1

10

12
INVERSE
QUANTIZER

14
PRIMARY
INVERSE
TRANSFORMER

16
SECONDARY
INVERSE
TRANSFORMER

EP 2 779 646 A1

## FIG. 2

# FIG. 3

255

| buffer 1 | = | Clip3 (OutPutOfDeQuantizer, $Min_1$ , $Max_1$ ) |

25

30          265          255

| register1 | = | $DCT^T$ | X | |

275

| buffer 2 | = | Clip3 ($register_1$ +$Offset_1$ )>>$shift_1$ , $Min_2$ , $Max_2$ ) |

27

32          275          285

| register2 | = | | X | DCT |

34

| rec_res | = | ($register_2$ +$Offset_2$ )>>$shift_2$ |

295

## FIG. 4

```
                    ( START )
                        │
                        ▼
┌──────────────────────────────────────────────────┐
│   RECEIVE QUANTIZED TRANSFORMATION COEFFICIENTS    │── 41
└──────────────────────────────────────────────────┘
                        │
                        ▼
┌──────────────────────────────────────────────────┐
│     GENERATE TRANSFORMATION COEFFICIENTS VIA INVERSE │
│  QUANTIZATION AND CLIP TRANSFORMATION COEFFICIENTS   │── 43
│   TO FIRST MAXIMUM VALUE DETERMINED BASED ON SIZE    │
│                    OF BLOCK                          │
└──────────────────────────────────────────────────┘
                        │
                        ▼
┌──────────────────────────────────────────────────┐
│  PERFORM PRIMARY INVERSE TRANSFORMATION ON CLIPPED   │
│   TRANSFORMATION COEFFICIENTS AND CLIP INTERMEDIATE  │── 45
│  DATA GENERATED VIA PRIMARY INVERSE TRANSFORMATION   │
│  TO SECOND MAXIMUM VALUE DETERMINED BASED ON SIZE    │
│          OF BLOCK AND INTERNAL BIT DEPTH             │
└──────────────────────────────────────────────────┘
                        │
                        ▼
┌──────────────────────────────────────────────────┐
│      PERFORM SECONDARY INVERSE TRANSFORMATION        │── 47
│            ON CLIPPED INTERMEDIATE DATA              │
└──────────────────────────────────────────────────┘
                        │
                        ▼
                    (  END  )
```

## FIG. 5

50

```
        52                    10                      54
┌──────────────┐   ┌──────────────────┐   ┌──────────────┐
│              │   │     INVERSE      │   │              │
──▶│   RECEIVER    │──▶│  TRANSFORMATION  │──▶│  PREDICTION  │
│              │   │    APPARATUS     │   │   DECODER    │
└──────────────┘   └──────────────────┘   └──────────────┘
```

## FIG. 6

START

EXTRACT QUANTIZED TRANSFORMATION COEFFICIENTS BY PARSING RECEIVED BITSTREAM — 61

GENERATE TRANSFORMATION COEFFICIENTS VIA INVERSE QUANTIZATION AND CLIP TRANSFORMATION COEFFICIENTS TO FIRST MAXIMUM VALUE DETERMINED BASED ON SIZE OF BLOCK — 62

PERFORM PRIMARY INVERSE TRANSFORMATION ON CLIPPED TRANSFORMATION COEFFICIENTS AND CLIP INTERMEDIATE DATA GENERATED VIA PRIMARY INVERSE TRANSFORMATION TO SECOND MAXIMUM VALUE DETERMINED BASED ON SIZE OF BLOCK AND INTERNAL BIT DEPTH — 63

PERFORM SECONDARY INVERSE TRANSFORMATION ON CLIPPED INTERMEDIATE DATA — 64

RESTORE IMAGE DATA BY PERFORMING INTRA PREDICTION DECODING OR MOTION COMPENSATION ON RESIDUAL DATA GENERATED VIA SECONDARY INVERSE TRANSFORMATION — 65

END

## FIG. 7

70

| ENCODER 72 | INVERSE TRANSFORMATION APPARATUS 10 | PREDICTION DECODER 74 |

# FIG. 8

START

PERFORM TRANSFORMATION AND QUANTIZATION ON RESIDUAL DATA GENERATED VIA INTRA PREDICTION ENCODING OR MOTION COMPENSATION ——81

RECEIVE QUANTIZED TRANSFORMATION COEFFICIENTS GENERATED VIA TRANSFORMATION AND QUANTIZATION ——82

GENERATE TRANSFORMATION COEFFICIENTS VIA INVERSE QUANTIZATION AND CLIP TRANSFORMATION COEFFICIENTS TO FIRST MAXIMUM VALUE DETERMINED BASED ON SIZE OF BLOCK ——83

PERFORM PRIMARY INVERSE TRANSFORMATION ON CLIPPED TRANSFORMATION COEFFICIENTS AND CLIP INTERMEDIATE DATA GENERATED VIA PRIMARY INVERSE TRANSFORMATION TO SECOND MAXIMUM VALUE DETERMINED BASED ON SIZE OF BLOCK AND INTERNAL BIT DEPTH ——84

PERFORM SECONDARY INVERSE TRANSFORMATION ON CLIPPED INTERMEDIATE DATA ——85

RESTORE IMAGE DATA BY PERFORMING INTRA PREDICTION DECODING OR MOTION COMPENSATION ON RESIDUAL DATA GENERATED VIA SECONDARY INVERSE TRANSFORMATION ——86

END

FIG. 9

100

110
MAXIMUM CODING UNIT SPLITTER

120
CODING UNIT DETERMINER

130
OUTPUT UNIT

FIG. 10

200

210
RECEIVER

220
IMAGE DATA AND ENCODING INFORMATION EXTRACTOR

230
IMAGE DATA DECODER

FIG. 11

**FIG. 12**

## FIG. 13

EP 2 779 646 A1

**FIG. 14**

MAXIMUM CODING UNIT

MAXIMUM HEIGHT AND MAXIMUM WIDTH OF CODING UNIT = 64    MAXIMUM DEPTH=3

600

64 ⟋610
64
64×64

64 ⟋612
32
64×32

32 ⟋614
64
32×64

32 ⟋616
32
32×32

PREDICTION UNIT/PARTITION

32 ⟋620
32
32×32

32 ⟋622
16
32×16

16 ⟋624
32
16×32

16 ⟋626
16
16×16

16 ⟋630
16
16×16

16 ⟋632
8
16×8

8 ⟋634
16
8×16

8 ⟋636
8
8×8

MINIMUM CODING UNIT

8 ⟋640
8
8×8

8 ⟋642
4
8×4

4 ⟋644
8
4×8

4 ⟋646
4
4×4

DEEPER CODING UNITS

EP 2 779 646 A1

44

# FIG. 15

CODING UNIT (710)          TRANSFORMATION UNIT (720)

64

64    64×64

32

32    32×32

# FIG. 16

PARTITION TYPE (800)

2N  802        2N  804        N  806        N  808

2N  CU_0       N   0          2N  0  1      N  0  1
                   1                           2  3

64×64

PREDICTION MODE (810)

812                814                816

INTRA MODE         INTER MODE         SKIP MODE

SIZE OF TRANSFORMATION UNIT(820)

822    824              826    828

INTRA                  INTER

**FIG. 17**

FIG. 18

CODING UNIT (1010)

FIG. 19

PREDICTION UNIT (1060)

FIG. 20

TRANSFORMATION UNIT (1070)

## FIG. 21

EP 2 779 646 A1

CU ⎯1300

| 1302 | 1312 | 1314 |
| | 1316 | 1318 |
| 1304 | 1306 | |

PU

| | 1322 | 1324 | 1326 | 1328 | 1332 | 1334 | 1336 | 1338 |
| 2Nx2N | 2NxN | Nx2N | NxN | 2NxnU | 2NxnD | nLx2N | nRx2N |

TU

TU size flag=0 ⎯1342

TU size flag=1 ⎯1344

TU

TU size flag=0 ⎯1352

TU size flag=1 ⎯1354

FIG. 22

Se

Tr

DISC (26000)

FIG. 23

26700

26800

26000

FIG. 24

CAMERA (12600)

COMPUTER (12100)

PDA (12200)

VIDEO CAMERA (12300)

MOBILE PHONE (12500)

(11700)

(11800)

(11900)

(12000)

COMMUNICATION
NETWORK
(11400)

11000

INTERNET SERVICE PROVIDER
(11200)

STREAMING SERVER
(11300)

INTERNET
(11100)

FIG. 25

FIG. 26

FIG. 27

SATELLITE (12900)

12820

MONITOR
(12840)

REPRODUCING
APPARATUS
(12830)

방BROADCASTING
STATION (12890)

ANTENNA (12910)

AUTOMOBILE
(12920)

HOUSEHOLD
ANTENNA (12860)

AUTOMOBILE NAVIGATION
SYSTEM (12930)

CABLE ANTENNA (12850)

TV MONITOR
(12880)

SET-TOP
BOX (12870)

12960

TV (12810)

12970

SD

HARD DISC
RECORDER (12950)

EP 2 779 646 A1

FIG. 28

## INTERNATIONAL SEARCH REPORT

| International application No. |
|---|
| **PCT/KR2012/009326** |

**A. CLASSIFICATION OF SUBJECT MATTER**

***H04N 7/30(2006.01)i***

According to International Patent Classification (IPC) or to both national classification and IPC

**B. FIELDS SEARCHED**

Minimum documentation searched (classification system followed by classification symbols)
H04N 7/30; H04N 7/32; H04N 7/26; G06T 9/00

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: quantizer, inverse quantizer, coefficient, cropping, matrix, block

**C. DOCUMENTS CONSIDERED TO BE RELEVANT**

| Category* | Citation of document, with indication, where appropriate, of the relevant passages | Relevant to claim No. |
|---|---|---|
| A | JP 2010-074705 A (RENESAS TECHNOLOGY CORP) 02 April 2010<br>See abstract, claim 1, figure 1. | 1-15 |
| A | JP 2008-187574 A (SONY CORP) 14 August 2008<br>See abstract, claims 1-3, figure 15. | 1-15 |
| A | JP 07-123413 A (SEIKO EPSON CORP et al.) 12 May 1995<br>See abstract, claim 1, figure 1. | 1-15 |

☐ Further documents are listed in the continuation of Box C.   ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 25 FEBRUARY 2013 (25.02.2013) | **26 FEBRUARY 2013 (26.02.2013)** |

| Name and mailing address of the ISA/KR | Authorized officer |
|---|---|
| Korean Intellectual Property Office<br>Government Complex-Daejeon, 189 Seonsa-ro, Daejeon 302-701, Republic of Korea | |
| Facsimile No. 82-42-472-7140 | Telephone No. |

Form PCT/ISA/210 (second sheet) (July 2009)

INTERNATIONAL SEARCH REPORT
Information on patent family members

International application No.

**PCT/KR2012/009326**

| Patent document cited in search report | Publication date | Patent family member | Publication date |
|---|---|---|---|
| JP 2010-074705 A | 02.04.2010 | NONE | |
| JP 2008-187574 A | 14.08.2008 | CN 101237577 A | 06.08.2008 |
| | | CN 101237577 B | 07.09.2011 |
| | | CN 101237577 C0 | 06.08.2008 |
| | | EP 1954058 A2 | 06.08.2008 |
| | | EP 1954058 A3 | 17.11.2010 |
| | | JP 04-254867 B2 | 15.04.2009 |
| | | KR 10-2008-0071940 A | 05.08.2008 |
| | | KR20080071940A | 05.08.2008 |
| | | TW 200843509 A | 01.11.2008 |
| | | TW 200843509 A | 01.11.2008 |
| | | US 2008-0181522 A1 | 31.07.2008 |
| | | US 8107755 B2 | 31.01.2012 |
| JP 07-123413 A | 12.05.1995 | JP 03-673529 B2 | 20.07.2005 |
| | | KR 10-0287624 B1 | 16.04.2001 |
| | | US 05621466A A | 15.04.1997 |

Form PCT/ISA/210 (patent family annex) (July 2009)